# EUROPEAN PATENT APPLICATION

(11) **EP 4 826 938 A1**
(43) Date of publication of application: **21.10.2026**
(21) Application number: 25300047.5
(22) Date of filing: 16.04.2025
(51) Int. Cl.: H02J 3/00, H02J 13/00

(54) **METHOD AND PROCESSING SYSTEM METHOD FOR RESOLVING A CONGESTION IN A POWER GRID**

(71) Applicant: Hitachi Energy Germany AG, 68309 Mannheim (DE)
(72) Inventor: GIUNTOLI, Marco, 64521 Groß-Gerau (DE); GHAWASH, Faiq, 68159 Mannheim (DE); WANG, Zhenyuan, Apex, North Carolina, 27502 (US); SCHMITT, Susanne, 69115 Heidelberg (DE); MITRENTSIS, Georgios, 70736 Fellbach (DE); KSIEZYK, Adam, 30-057 Kraków (PL); SUBASIC, Milos, 08005 Barcelona (ES); HARJUNKOSKI, Iiro, 02200 Espoo (FI)
(74) Representative: Meier, Florian

(57) **Abstract**

To perform a congestion resolution for a power grid (10), a processing system (50) is provided. The power grid (10) comprises a plurality of grid nodes (11-22) and a plurality of branches (30). Responsive to detection of a congestion, the processing system (50) is operative to perform a process that comprises determining a linearized correlation of changes in grid node conditions and a magnitude of an electrical quantity for at least one congested branch (31, 32). The processing system (50) is operative to determine the linearized correlation based on a phase angle (83) of the electrical quantity. The processing system (50) is operative to perform or enable at least one control action to resolve the congestion.

## Description

### TECHNICAL FIELD

Embodiments of the invention relate to systems and methods operative to perform processing operations related to electric power systems. Embodiments of the invention relate in particular to systems and methods useful for addressing congestions in a power grid.

### BACKGROUND

Power grids are important infrastructure components. Power grids may include a transmission grid and/or one or several distribution grids.

The increasing number of distributed energy resources (DERs) and/or loads (e.g., electric vehicle (EV) charging stations) can make it both more likely for situations to occur in which there are operating range violations (e.g., overcurrent situations or voltage range deviations) and more challenging to address such operating range violations. To address such situations, a re-dispatch may need to be performed, e.g., by adjusting settings of generators and/or loads. Traditionally, such a re-dispatch is performed based on human operator experience. This may result in a re-dispatch that is associated with a large waste of renewable energy, which goes against clean-energy policies. Such techniques may also be prone to having shortcomings due to potential human operator errors.

In the context of distribution grids, applications for congestion resolutions are becoming increasingly important due to the increasing penetration of DERs and assets such as EV chargers. Thus, congestion resolution is an important challenge in association with efforts to reduce greenhouse gas emissions.

T. Leveringhaus and L. Hofmann, "Comparison of methods for state prediction: Power Flow Decomposition (PFD), AC Power Transfer Distribution factors (AC-PTDFs), and Power Transfer Distribution factors (PTDFs)," 2014 IEEE PES Asia-Pacific Power and Energy Engineering Conference (APPEEC), Hong Kong, China, 2014, pp. 1-6, doi: 10.1109/APPEEC.2014.7066183; H. Ahmadi, J. R. Marti and A. Alsubaie, "Sensitivity factors for distribution systems," 2015 IEEE Power & Energy Society General Meeting, Denver, CO, USA, 2015, pp. 1-5, doi: 10.1109/PESGM.2015.7285796; and WO 2024/199667 A1 disclose techniques useful in association with power grids. While the techniques of these documents provide contributions suitable to address certain aspects of congestion resolution, there is an ongoing need for further improvements, such as techniques that allow congestion resolution to be performed in a time-efficient manner for enhanced control of power grids.

Thus, there is still an ongoing need for enhanced techniques for congestion resolution in power grids.

### SUMMARY

It is an objective of the invention to provide methods, processing systems, and/or systems that provide enhanced techniques of resolving congestions. In particular an objective of the invention is to provide methods, processing systems, and/or systems operative to perform congestion resolution processing in an efficient manner. It is also an object of the invention to provide methods, processing systems, and/or systems that are operative to provide relationships between magnitudes of electrical quantities of branches having an operating range violation (such as a branch overcurrent) and grid node conditions (such as active and reactive power injections at grid nodes) in a manner that remains operative in scenarios such as presence of unsymmetrical grid assets (e.g., lateral power transformer), unbalanced situations, and/or high voltage deviations between adjacent buses, while allowing settings that resolve the congestion to be determined in an efficient manner.

According to embodiments, a method, a processing system, a machine-readable instruction code, and an electric power system as recited in the claims are provided. The dependent claims define preferred or advantageous embodiments.

According to an aspect of the invention, there is provided a method of resolving a congestion in a power grid, the power grid comprising a plurality of grid nodes and a plurality of branches. The method comprises responsive to detection of the congestion, performing, by at least one processing system, a process that comprises identifying, by the at least one processing system, one or several congested branches of the power grid for which there exists an operating range violation. The process further comprises determining, by the at least one processing system, a transfer distribution factor (TDF) matrix that approximates, for at least one of the one or several congested branches, a linearized correlation of changes in grid node conditions and a magnitude of an electrical quantity for the at least one of the one or several congested branches. The at least one processing system determines the TDF matrix based at least on (i) a sensitivity matrix that quantifies a sensitivity of a real part and/or of an imaginary part of the electrical quantity to the grid node conditions and (ii) a phase angle of the electrical quantity. The process further comprises determining, by the at least one processing system and based on the TDF matrix, adjustments of the grid node conditions that mitigate the operating range violation for the at least one of the one or several congested branches. The process further comprises establishing, by the at least one processing system and based on the adjustments, whether the process is to be repeated in an iterative manner. The method comprises performing or enabling, by the at least one processing system, at least one control action based on the adjustments.

Various effects and advantages are attained by the method. The method establishes a linearized correlation that links a magnitude of a complex-valued electrical quantity to the grid node conditions, thereby establishing a relationship between the magnitude and the grid node conditions that is represented by a linear relationship. This allows the adjustments to be determined in an efficient manner. The linear relationship will generally be an approximative relationship, being a linearized correlation of a relationship that can generally be non-linear, as the magnitude of the complex-valued electrical quantity can have a non-linear, potentially complicated dependency on grid node conditions. To account for this, the method is operative to iteratively repeat the process. Thereby, adjustments of the grid node conditions can be improved in an iterative manner, even when the linearized correlation expressed by the TDF matrix is approximative, and can provide congestion resolution by combining the linearization correlation, which is usable in the formulation of a linear programming problem, with an iterative repetition of the process. As compared to legacy techniques that use optimal power flow (OPF) processing, it is not required to solve the OPF problem. The technique lends itself to applications in which it is desired to provide the adjustments that resolve the faster than what would be attainable by OPF, to thereby speed up the resolution of operating range violations. As compared to techniques that are based on PTDF (Power Transfer Distribution Factor) processing, the method can be used to provide enhanced results in situations in which PTDF-based techniques have shortcomings, such as power grids having unsymmetrical grid assets, unbalanced situations, and/or high voltage deviations between adjacent branches. Thus, the method provides a technique for performing a congestion resolution in a manner that provides versatile applicability and a more time-efficient return of the power grid to the permissible operating range(s).

The electrical quantity may be represented as a complex-valued electrical quantity (such as a current and/or voltage phasor), wherein the process comprises determining an approximation for the magnitude based on the real and/or imaginary part and further based on the phase angle, wherein the at least one processing system determines the adjustments based on the approximation for the magnitude.

Thereby, the method is operative to provide a linearized approximation of the magnitude based on the real and/or imaginary parts in combination with the phase angle, which is used in formulating an optimization problem (such as a linear programming problem) that can be solved to obtain the adjustments.

The real and imaginary parts of the electrical quantity may be linear functions of the grid node conditions.

Thereby, the method is operative to provide a linearized approximation of the magnitude of the electrical quantity which is a linear function of the grid node conditions.

The TDF matrix may define an approximation of the magnitude of the electrical quantity as a linear function of the power grid node conditions for power grid nodes having power grid assets that are controllable for performing the congestion resolution.

Thereby, the method is operative to provide a linearized approximation of the magnitude of the electrical quantity which is a linear function of the grid node conditions.

The phase angle may be determined based on phasor measurements (if available) and/or computationally, e.g., based on power flow.

Thereby, the method is operative to determine the phase angle in an efficient manner.

Determining the adjustments may comprise solving, by the at least one processing system, a linear programming (LP) problem which is dependent on the TDF matrix and, thus, on the phase angle.

Thereby, the adjustments may be determined by the at least one processing system in an efficient manner, using processing techniques suitable to solve linear problems. Thereby, the determination of the adjustments is performed efficiently, allowing the congestion to be resolved faster than by various conventional approaches.

Determining the adjustments may comprise solving, by the at least one processing system, a mixed integer linear programming (MILP) problem which is dependent on the TDF matrix and, thus, on the phase angle.

Thereby, the adjustments may be determined by the at least one processing system in an efficient manner, using processing techniques suitable to solve linear problems. Thereby, the determination of the adjustments is performed efficiently, allowing the congestion to be resolved faster than by various conventional approaches.

The LP or MILP problem may be a constrained optimization problem, wherein an inequality constraint is dependent on the TDF matrix and, thus, on the phase angle.

Thereby, the adjustments may be determined by the at least one processing system in an efficient manner, using processing techniques suitable to solve linear problems. Thereby, the determination of the adjustments is performed efficiently, allowing the congestion to be resolved faster than by various conventional approaches.

Determining the adjustments may comprise determining settings (e.g., setpoints) for controllable power grid assets that change the magnitude of the electrical quantity, wherein the determination of the adjustments is repeated in an iterative manner until a termination criterion is fulfilled.

Thereby, the congestion can be resolved in an efficient manner.

Solving the LP problem or the MILP problem may comprise determining adjustments (e.g., setpoints or other settings) for controllable power grid assets that change the magnitude of the electrical quantity, wherein the determination of the adjustments is repeated in an iterative manner until a termination criterion is fulfilled.

Thereby, the congestion can be resolved in an efficient manner.

Determining the adjustments may comprise determining the adjustments (e.g., by solving a LP or MILP problem) that cause each of the one or several branches to return to its permitted operating range.

Thereby, all congestions can be resolved using linear processing techniques when determining the adjustments.

The electrical quantity may comprise electrical current.

Thereby, congestions comprising a branch overcurrent can be resolved.

The grid node conditions may comprise active and reactive power deviations.

Thereby, the at least one processing system can determine the linearized correlation between the magnitude of the electrical quantity (e.g., magnitude of branch current) and both the active and reactive power deviations for several (e.g., all) grid nodes at which there are assets that are controllable to resolve the operating range violation of the electrical quantity in the respective branch. This facilitates the identification of adjustments that need to be made to resolve the congestion.

Alternatively or additionally, the grid node conditions may comprise voltage magnitude and voltage phase of a voltage between grid nodes.

Thereby, the at least one processing system can determine the linearized correlation between the magnitude of the electrical quantity (e.g., magnitude of branch current) and both the voltage magnitude and the voltage phase for several (e.g., all) grid nodes at which there are assets that are controllable to resolve the operating range violation of the electrical quantity in the respective branch. This facilitates the identification of adjustments that need to be made to resolve the congestion.

Determining the TDF may comprise a matrix multiplication of a rotation matrix and the sensitivity matrix, the rotation matrix defining a two-dimensional rotation by the phase angle in a coordinate system spanned by the real part and the imaginary parts of the electrical quantity.

Thereby, the at least one processing system can determine the linearized correlation between the magnitude of the electrical quantity and the grid node conditions in an efficient manner, contributing to a swift resolution of the congestion even when the power grid comprises unsymmetrical grid assets, has an unbalanced situation, or exhibits high voltage deviations between (adjacent) branches.

The method may comprise obtaining, by the at least one processing system, an admittance matrix of the power grid and primitive admittance matrices for at least some of the plurality of branches.

Thereby, the at least one processing system can determine the sensitivity matrix (and, thus, the TDF matrix) in an efficient manner.

The process may comprise determining an operating point of the power grid based on the admittance matrix.

Thereby, the at least one processing system may determine the operating point for which the sensitivity matrix and the TDF matrix are determined in an efficient manner.

Determining the TDF matrix may further comprise determining, for the at least one of the one or several congested branch and based on the primitive admittance matrices, a Jacobian matrix at the operating point, wherein the Jacobian matrix has matrix elements that are dependent on partial derivatives of active and reactive bus power injections with respect to a voltage phase angle and a voltage magnitudes of bus/phase voltages.

Thereby, the at least one processing system may determine the operating point for which the sensitivity matrix and the TDF matrix are determined in an efficient manner.

Determining the TDF matrix may comprise determining the sensitivity matrix based on the Jacobian matrix.

Thereby, the at least one processing system may determine the sensitivity matrix and the TDF matrix are determined in an efficient manner.

Determining the sensitivity matrix may comprise computing a pseudo-inverse of the Jacobian matrix discarding non-congested branches which are within a permitted operating range.

Thereby, the at least one processing system may determine the sensitivity matrix and the TDF matrix are determined in an efficient manner.

Determining the operating point may further comprise processing observations obtained from the power grid and/or settings applied to the power grid by a power grid control system.

Thereby, the at least one processing system may perform the congestion resolution by performing a process that processes the observations obtained by measurement instrumentation on the power grid and/or the settings for the power grid to determine the adjustments to be made for the congestion resolution.

Determining the TDF matrix may further comprise determining, based on the operating point, transformation matrices for delta-connected assets that map active and reactive power deviations for delta-connected assets to active and reactive power deviations for star-connected assets with respect to a ground reference.

Thereby, the at least one processing system determines and uses the transformation matrices to allow active and reactive power deviations for delta-connected assets to be transformed so as to allow them to be treated in the same manner as star-connected assets with respect to the ground reference. This provides enhanced accuracy and ease of implementation.

Determining the operating point may further comprise executing, by the at least one processing system, a power flow solver based on the admittance matrix.

Thereby, the at least one processing system may determine the operating point for which the sensitivity matrix and the TDF matrix are determined in an efficient manner.

Determining the adjustments may comprise computing, by the at least one processing system, a solution of a LP model that is dependent on the TDF matrix.

Thereby, the adjustments may be determined by the at least one processing system in an efficient manner, using processing techniques suitable to solve linear problems. Thereby, the determination of the adjustments is performed efficiently, allowing the congestion to be resolved faster than by various conventional approaches.

The power grid nodes may comprise several assets, which are controllable based on the adjustments.

Thereby, the several assets can be controlled based on the processing performed by the at least one processing system to resolve the congestion in the one or several congested branches.

Determining the adjustments may comprise determining settings for at least some of the several assets that resolve the congestion.

Thereby, the several assets can be controlled based on the processing performed by the at least one processing system to resolve the congestion in the one or several congested branches.

The method may further comprise applying, by the at least one processing system or by a control system interfaced with the at least one processing system, the settings to resolve the congestion.

Thereby, the several assets are controlled based on the processing performed by the at least one processing system to resolve the congestion in the one or several congested branches.

Determining whether the process is to be repeated may comprise determining, based on the adjustments determined in a most recent iteration, whether a termination criterion is fulfilled.

Thereby, the adjustments may be iteratively improved before settings are applied to the assets that are controllable to resolve the congestion.

The termination criterion may comprise or may be return of all branches to their permitted operating ranges for an operating point adjusted based on the adjustments in a most recent iteration of the process.

Thereby, the adjustments may be iteratively improved until all congestions are resolved before settings are applied to the assets that are controllable to resolve the congestion.

The method may comprise iteratively repeating the process, wherein an operating point for any iteration other than a first iteration of the process is based on the adjustments determined in at least one (i.e., one or several) of the preceding iterations.

Thereby, the adjustments may be iteratively improved until all congestions are resolved before settings are applied to the assets that are controllable to resolve the congestion.

The several assets may comprise controllable generators and/or controllable loads.

Thereby, the several assets can be controlled based on the processing performed by the at least one processing system so as to resolve the congestion in the one or several congested branches.

The several assets may comprise unsymmetrical assets.

Thereby, the method is operative to implement congestion resolution for a power grid that comprises unsymmetrical assets.

The several assets may comprise one, several, or all of: electric vehicle charging systems photovoltaic systems; heat pumps; heating, ventilation, and air conditioning (HVAC) systems; energy storage systems; wind turbines.

Thereby, the method is operative to implement congestion resolution for a power grid in which OPF- or PTF-based techniques had shortcomings due to the need to address non-linearities (which could be addressed by OPF-based techniques, but at the expense of delays in resolving the congestion) and/or were prone to inaccuracies (such as for PTF-based techniques).

Determining the adjustments may comprise determining settings for at least some of electric vehicle charging systems photovoltaic systems; heat pumps; heating, ventilation, and air conditioning (HVAC) systems; energy storage systems; wind turbines.

Thereby, the method is operative to implement congestion resolution for a power grid in which OPF- or PTF-based techniques have shortcomings, e.g., due to the need to address non-linearities (which could be addressed by OPF-based techniques, but at the expense of delays in resolving the congestion), and/or were prone to inaccuracies (such as for PTF-based techniques).

The power grid may comprise a power transmission grid and/or a power distribution grid.

Thereby, the method is operative to implement congestion resolution for various grid types.

The power grid may comprise a distribution grid comprising one, several, or all of:
unsymmetrical loads and/or generators; unsymmetrical transformers (such as a lateral power transformer); a passive element connecting two or more of the grid nodes or several passive elements connecting two or more of the grid nodes; single- and/or bi- and/or three-phase overhead lines; single- and/or bi- and/or three-phase cables; single- and/or bi- and/or three-phase loads; single- and/or bi- and/or three-phase generators.

Thereby, the method is operative to implement congestion resolution for a power grid in which OPF- or PTF-based techniques have shortcomings, e.g., due to the need to address non-linearities (which could be addressed by OPF-based techniques, but at the expense of delays in resolving the congestion), and/or were prone to inaccuracies (such as for PTF-based techniques).

The power grid may comprise assets having a different number of phases and/or wherein the power grid may comprise both delta-connected assets and star-connected assets.

Thereby, the method is operative to implement congestion resolution for various grid types.

The method may comprise determining the TDF matrices for several congested branches using parallel processing.

Thereby, the speed at which the congestion can be resolved is reduced.

The at least one processing system may comprise a plurality of several processing circuits, configured to determine respectively at least one of the TDF matrices in parallel with the determination of other ones of the TDF matrices by different ones of the several processing circuits.

Thereby, the speed at which the congestion can be resolved is reduced.

The at least one processing system may comprise at least one processing circuits operative to determine the several TDF matrices in several processing threads.

Thereby, the speed at which the congestion can be resolved is reduced.

According to a further aspect of the invention, there is disclosed a processing system for resolving a congestion in a power grid, the power grid comprising a plurality of grid nodes and a plurality of branches. The processing system comprises at least one processing circuit operative to, responsive to detection of the congestion, perform a process that comprises: identifying, by the at least one processing system, one or several congested branches of the power grid for which there exists an operating range violation; determining, by the at least one processing system, a transfer distribution factor, TDF, matrix that approximates, for at least one of the one or several congested branches, a linearized correlation of changes in grid node conditions and a magnitude of an electrical quantity for the at least one of the one or several congested branches; the at least one processing circuit being operative to determine the TDF matrix based at least on (i) a sensitivity matrix that quantifies a sensitivity of a real part and/or of an imaginary part of the electrical quantity to the grid node conditions and (ii) a phase angle of the electrical quantity; determining, by the at least one processing system and based on the TDF matrix, adjustments of the grid node conditions that mitigate the operating range violation for the at least one of the one or several congested branches; and establishing, by the at least one processing system and based on the adjustments, whether the process is to be repeated in an iterative manner. The at least one processing circuit is further operative to perform or enable at least one control action based on the adjustments.

Various effects and advantages are attained by the processing system. The processing system is operative to establish a linearized correlation that links a magnitude of a complex-valued electrical quantity to the grid node conditions, thereby establishing a relationship between the magnitude and the grid node conditions that is represented by a linear relationship. This allows the processing system to determine the adjustments in an efficient manner. The linear relationship will generally be an approximative relationship, being a linearized correlation of a relationship that can generally be non-linear, as the magnitude of the complex-valued electrical quantity can have a non-linear, potentially complicated dependency on grid node conditions. To account for this, the processing system is operative to iteratively repeat the process. Thereby, adjustments of the grid node conditions can be improved in an iterative manner, even when the linearized correlation expressed by the TDF matrix is approximative, and can provide congestion resolution by combining the linearization correlation, which is usable in the formulation of a linear programming problem, with an iterative repetition of the process. As compared to legacy techniques that use optimal power flow (OPF) processing, it is not required to solve the OPF problem. The technique lends itself to applications in which it is desired to provide the adjustments that resolve the faster than what would be attainable by OPF, to thereby speed up the resolution of operating range violations. As compared to techniques that are based on PTDF (Power Transfer Distribution Factor) processing, the processing system is operative to provide enhanced results in situations in which PTDF-based techniques have shortcomings, such as power grids having unsymmetrical grid assets, unbalanced situations, and/or high voltage deviations between adjacent branches. Thus, the processing system is operative to perform a congestion resolution in a manner that provides versatile applicability and a more time-efficient return of the power grid to the permissible operating range(s).

Optional features of the processing system and the effects attained thereby correspond to the features and effects discussed in association with the method according to any aspect or embodiment.

The processing system may be operative to perform the method according to any aspect or embodiment.

According to a further aspect of the invention, there is provided a method of resolving a congestion in a power grid, the power grid comprising a plurality of grid nodes and a plurality of branches, the plurality of grid nodes comprising delta-connected assets. The method comprises responsive to detection of the congestion, performing, by at least one processing system, a process that comprises: identifying, by the at least one processing system, one or several congested branches of the power grid for which there exists an operating range violation; and determining, by the at least one processing system and for at least one of the one or several congested branches, settings for grid nodes that mitigate the operating range violation, wherein determining the settings comprises determining transformation matrices for the delta-connected assets that map active and reactive phase-to-phase power deviations for the delta-connected assets to active and reactive phase-to-neutral power deviations with respect to a ground reference. The method comprises performing or enabling, by the at least one processing system, at least one control action based on the settings.

Various effects and advantages are attained by the method. The method determines the transformation matrices to map active and reactive phase-to-phase power deviations for the delta-connected assets to active and reactive phase-to-neutral power deviations with respect to a ground reference, thereby providing versatility in the sense that the congestion resolution can be performed, e.g., in an iterative method, for a power grid that comprises delta-connected assets, optionally also star-connected assets. The determination of the transformation matrices makes it possible for the at least one processing system to determine the settings by iteratively repeating the process, wherein the magnitude of an electrical quantity for at least one congested branch is approximated, in each of the iterations, based on a phase angle of the electrical quantity in a coordinate plane spanned by the real and imaginary parts of the electrical quantity.

The method may comprise determining whether the process is to be repeated. Determining whether the process is to be repeated may comprise determining, based on adjustments of grid node conditions determined in a most recent iteration, whether a termination criterion is fulfilled.

Thereby, the effects of changes to grid node conditions may be assessed and continually improved before settings are applied to the assets that are controllable to resolve the congestion.

The termination criterion may comprise or may be a return of each of the one or several congested branches to their permitted operating ranges for an operating point adjusted based on the adjustments in a most recent iteration of the process.

Thereby, the effects of changes to grid node conditions may be assessed and continually improved before settings are applied to the assets that are controllable to resolve the congestion.

The method may comprise iteratively repeating the process, wherein an operating point for any iteration other than a first iteration of the process is based on the adjustments determined in at least one (i.e., one or several) of the preceding iterations.

Thereby, the effects of changes to grid node conditions may be assessed and continually improved before settings are applied to the assets that are controllable to resolve the congestion.

The method may comprise iteratively repeating the process, wherein the transformation matrices are determined in each of the iterations.

Thereby, the method can iteratively determine how the settings are to be adjusted, while taking into account that the transformation matrices can vary as grid node conditions are continually adjusted from one iteration to the next one.

The method may comprise several iterations of the process, wherein each of the iterations comprises determining an approximation for a linearized correlation of changes in grid node conditions and a magnitude of an electrical quantity for the at least one of the one or several congested branches, with the linearized correlation being dependent on the phase angle of the electrical quantity.

Thereby, the method is operative to implement congestion resolution in a time-efficient manner even for power grids in which conventional OPF- or PTF-based techniques have shortcomings. The method allows the settings to be determined in an efficient manner, using the linearized correlation in which the magnitude of the electrical quantity is approximated as a linear function of power grid conditions. The linear function will generally be an approximative relationship, being a linearized correlation of a relationship that can generally be non-linear, as the magnitude of the complex-valued electrical quantity can have a non-linear, potentially complicated dependency on grid node conditions. To account for this, the method is operative to iteratively repeat the process. Thereby, adjustments of the grid node conditions can be improved in an iterative manner, even when the linearized correlation is approximative, and can provide congestion resolution by combining the linearization correlation, which is usable in the formulation of a linear programming problem, with an iterative repetition of the process.

The method may comprise obtaining, by the at least one processing system, an admittance matrix of the power grid and primitive admittance matrices for at least some of the plurality of branches.

Thereby, the at least one processing system may determine the operating point for which the transformation matrices are determined in an efficient manner.

The process may comprise determining an operating point of the power grid based on the admittance matrix, and the transformation matrices may be determined based on the operating point.

Thereby, the at least one processing system may determine the operating point for which the transformation matrices are determined in an efficient manner. This contributes to a congestion resolution that is applicable to a variety of power grid configurations.

Determining the operating point may comprise executing, by the at least one processing system, a power flow solver to determine the operating point based on the admittance matrix

Thereby, the at least one processing system may determine the operating point for which the transformation matrices are determined in an efficient manner. This contributes to a congestion resolution that is applicable to a variety of power grid configurations.

Determining the settings may comprise: determining, by the at least one processing system and for the one or several congested branches, a TDF matrix that approximates a linearized correlation of changes in grid node conditions and a magnitude of an electrical quantity for the at least one of the one or several congested branches; wherein the at least one processing system determines the TDF matrix based at least on (i) a sensitivity matrix that quantifies a sensitivity of a real and/or imaginary part of the electrical quantity to the grid node conditions, and (ii) a phase angle of the electrical quantity. The sensitivity matrix may be dependent on the transformation matrices.

Thereby, the method is operative to implement congestion resolution in a time-efficient manner even for power grids in which conventional OPF- or PTF-based techniques have shortcomings. The method allows the settings to be determined in an efficient manner, using the linearized correlation in which the magnitude of the electrical quantity is approximated as a linear function of power grid conditions.

The electrical quantity may be represented as a complex-valued electrical quantity (such as a current and/or voltage phasor), wherein the process comprises determining an approximation for the magnitude based on the real and/or imaginary part and further based on the phase angle, wherein the at least one processing system determines the adjustments based on the approximation for the magnitude.

Thereby, the method is operative to provide a linearized approximation of the magnitude based on the real and/or imaginary parts in combination with the phase angle, which is used in formulating an optimization problem (such as a linear programming problem) that can be solved to obtain the adjustments.

The real and imaginary parts of the electrical quantity may be linear functions of the grid node conditions.

Thereby, the method is operative to provide a linearized approximation of the magnitude of the electrical quantity which is a linear function of the grid node conditions.

The TDF matrix may define an approximation of the magnitude of the electrical quantity as a linear function of the power grid node conditions for power grid nodes having power grid assets that are controllable for performing the congestion resolution.

Thereby, the method is operative to provide a linearized approximation of the magnitude of the electrical quantity which is a linear function of the grid node conditions.

The electrical quantity may comprise electrical current.

Thereby, congestions comprising a branch overcurrent can be resolved.

The grid node conditions may comprise active and reactive power deviations.

Thereby, the at least one processing system can determine the linearized correlation between the magnitude of the electrical quantity (e.g., magnitude of branch current) and both the active and reactive power deviations for several (e.g., all) grid nodes at which there are assets that are controllable to resolve the operating range violation of the electrical quantity in the respective branch. This facilitates the identification of adjustments that need to be made to resolve the congestion.

Alternatively or additionally, the grid node conditions may comprise voltage magnitude and voltage phase of a voltage between grid nodes.

Thereby, the at least one processing system can determine the linearized correlation between the magnitude of the electrical quantity (e.g., magnitude of branch current) and both the voltage magnitude and the voltage phase for several (e.g., all) grid nodes at which there are assets that are controllable to resolve the operating range violation of the electrical quantity in the respective branch. This facilitates the identification of adjustments that need to be made to resolve the congestion.

Determining the TDF matrix may comprise a matrix multiplication of a rotation matrix and the sensitivity matrix, the rotation matrix defining a two-dimensional rotation by the phase angle in a coordinate system spanned by the real part and the imaginary part of the electrical quantity.

Thereby, the at least one processing system can determine the linearized correlation between the magnitude of the electrical quantity and the grid node conditions in an efficient manner, contributing to a swift resolution of the congestion even when the power grid comprises unsymmetrical grid assets, has an unbalanced situation, or exhibits high voltage deviations between (adjacent) branches.

Determining the TDF matrix may comprise determining, for the at least one of the one or several congested branches, a Jacobian matrix at the operating point, wherein the Jacobian matrix has matrix elements that are dependent on partial derivatives of active and reactive bus power injections with respect to a voltage phase angle and a voltage magnitudes of bus/phase voltages, and wherein determining the TDF matrix may comprise determining the sensitivity matrix based on the Jacobian matrix.

Thereby, the at least one processing system may determine the sensitivity matrix and the TDF matrix are determined in an efficient manner.

Determining the sensitivity matrix may comprise computing a pseudo-inverse of the Jacobian matrix that discards non-congested branches which are within a permitted operating range.

Thereby, the at least one processing system may determine the sensitivity matrix and the TDF matrix are determined in an efficient manner.

Determining the settings may comprise computing, by the at least one processing system, a solution of a LP problem (e.g., of a MILP problem) that is dependent on the transformation matrices.

Thereby, the settings may be determined by the at least one processing system in an efficient manner, using processing techniques suitable to solve linear problems. Thereby, the determination of the adjustments is performed efficiently, allowing the congestion to be resolved faster than by various conventional approaches.

The power grid nodes may comprise several assets, which are controllable based on the adjustments.

Thereby, the several assets can be controlled based on the processing performed by the at least one processing system to resolve the congestion in the one or several congested branches.

Determining the settings may comprise determining settings for at least some of the several assets that resolve the congestion.

Thereby, the several assets can be controlled based on the processing performed by the at least one processing system to resolve the congestion in the one or several congested branches.

The method may further comprise applying, by the at least one processing system or by a control system interfaced with the at least one processing system, the settings to resolve the congestion.

Thereby, the several assets are controlled based on the processing performed by the at least one processing system to resolve the congestion in the one or several congested branches.

The several assets may comprise controllable generators and/or controllable loads.

Thereby, the several assets can be controlled based on the processing performed by the at least one processing system so as to resolve the congestion in the one or several congested branches.

The several assets may comprise unsymmetrical assets.

Thereby, the method is operative to implement congestion resolution for a power grid that comprises unsymmetrical assets.

The several assets may comprise one, several, or all of: electric vehicle charging systems photovoltaic systems; heat pumps; HVAC systems; energy storage systems; wind turbines.

Thereby, the method is operative to implement congestion resolution for a power grid in which OPF- or PTF-based techniques had shortcomings due to the need to address non-linearities (such as for OPF-based techniques) and/or were prone to inaccuracies (such as for PTF-based techniques).

Determining the adjustments may comprise determining settings for at least some of electric vehicle charging systems photovoltaic systems; HVAC systems; energy storage systems; wind turbines.

Thereby, the method is operative to implement congestion resolution for a power grid in which OPF- or PTF-based techniques have shortcomings, e.g., due to the need to address non-linearities (such as for OPF-based techniques), and/or were prone to inaccuracies (such as for PTF-based techniques).

The power grid may comprise a power transmission grid and/or a power distribution grid.

Thereby, the method is operative to implement congestion resolution for various grid types.

The power grid may comprise a distribution grid comprising one, several, or all of:
unsymmetrical loads and/or generators; unsymmetrical transformers (such as a lateral power transformer); a passive element connecting two or more of the grid nodes or several passive elements connecting two or more of the grid nodes; single- and/or bi- and/or three-phase overhead lines; single- and/or bi- and/or three-phase cables; single- and/or bi- and/or three-phase loads; single- and/or bi- and/or three-phase generators.

Thereby, the method is operative to implement congestion resolution for a power grid in which OPF- or PTF-based techniques have shortcomings, e.g., due to the need to address non-linearities (such as for OPF-based techniques), and/or were prone to inaccuracies (such as for PTF-based techniques).

The power grid may comprise assets having a different number of phases and/or wherein the power grid may comprise both delta-connected assets and star-connected assets.

Thereby, the method is operative to implement congestion resolution for various grid types.

The method according to this aspect may be performed in combination with the method according to any other aspect or embodiment disclosed herein.

According to a further aspect of the invention, there is provided a processing system for resolving a congestion in a power grid, the power grid comprising a plurality of grid nodes and a plurality of branches, the plurality of grid nodes comprising delta-connected assets. The processing system comprises at least one processing circuit operative to, responsive to detection of the congestion, perform a process that comprises: identifying one or several congested branches of the power grid for which there exists an operating range violation; determining, for at least one of the one or several congested branches, settings for grid nodes that mitigate the operating range violation, wherein determining the settings comprises determining transformation matrices for the delta-connected assets that map active and reactive phase-to-phase power deviations for the delta-connected assets to active and reactive phase-to-neutral power deviations with respect to a ground reference. The at least one processing circuit is operative to perform or enable at least one control action based on the settings.

Various effects and advantages are attained by the processing system. The method determines the transformation matrices to map active and reactive phase-to-phase power deviations for the delta-connected assets to active and reactive phase-to-neutral power deviations with respect to a ground reference, thereby providing versatility in the sense that the congestion resolution can be performed, e.g., in an iterative method, for a power grid that comprises delta-connected assets, optionally also star-connected assets. The determination of the transformation matrices makes it possible for the at least one processing system to determine the settings by iteratively repeating the process, wherein the magnitude of an electrical quantity for at least one congested branch is approximated, in each of the iterations, based on a phase angle of the electrical quantity in a coordinate plane spanned by the real and imaginary parts of the electrical quantity.

Optional features of the processing system and the effects attained thereby correspond to the features and effects discussed in association with the method according to any aspect or embodiment.

The processing system may be operative to perform the method according to any aspect or embodiment.

An electric power system according to an aspect or embodiment comprises a power grid comprising a plurality of grid nodes and a plurality of branches; and the processing system according to any aspect or embodiment disclosed herein and operative to perform congestion resolution in the power grid.

Thereby, the effects disclosed in association with the processing systems according to the various aspects and embodiments are utilized in an electric power system.

The power grid nodes may comprise several assets, and the processing system may be configured to effect control actions for the several assets based on the adjustments.

Thereby, the several assets can be controlled based on the processing performed by the processing system to resolve the congestion in the one or several congested branches.

The several assets may comprise controllable generators and/or controllable loads.

Thereby, the congestion in the one or several congested branches can be resolved.

The several assets may comprise unsymmetrical assets.

Thereby, the electric power system is operative to implement congestion resolution for a power grid that comprises unsymmetrical assets.

The several assets may comprise one, several, or all of: electric vehicle charging systems photovoltaic systems; heat pumps; HVAC systems; energy storage systems; wind turbines.

Thereby, the electric power system is operative to implement congestion resolution for a power grid in which OPF- or PTF-based techniques had shortcomings due to the need to address non-linearities (which could be addressed by OPF-based techniques, but at the expense of delays in resolving the congestion) and/or were prone to inaccuracies (such as for PTF-based techniques).

The processing system may be operative to determine, for performing the congestion resolution, settings for at least some of electric vehicle charging systems photovoltaic systems; heat pumps; heating, ventilation, and air conditioning (HVAC) systems; energy storage systems; wind turbines.

Thereby, the processing system is operative to implement congestion resolution for a power grid in which OPF- or PTF-based techniques have shortcomings, e.g., due to the need to address non-linearities (which could be addressed by OPF-based techniques, but at the expense of delays in resolving the congestion), and/or were prone to inaccuracies (such as for PTF-based techniques).

The power grid may comprise a power transmission grid and/or a power distribution grid.

Thereby, the electric power system is operative to implement congestion resolution for various grid types.

The power grid may comprise a distribution grid comprising one, several, or all of:
unsymmetrical loads and/or generators; unsymmetrical transformers (such as a lateral power transformer); a passive element connecting two or more of the grid nodes or several passive elements connecting two or more of the grid nodes; single- and/or bi- and/or three-phase overhead lines; single- and/or bi- and/or three-phase cables; single- and/or bi- and/or three-phase loads; single- and/or bi- and/or three-phase generators.

Thereby, the processing system is operative to implement congestion resolution for a power grid in which OPF- or PTF-based techniques have shortcomings, e.g., due to the need to address non-linearities (which could be addressed by OPF-based techniques, but at the expense of delays in resolving the congestion), and/or were prone to inaccuracies (such as for PTF-based techniques).

The power grid may comprise assets having a different number of phases and/or the power grid may comprise both delta-connected assets and star-connected assets.

Thereby, the electric power system is operative to implement congestion resolution for various grid types.

According to a further aspect of the invention, there is disclosed a use method of using the method, the processing system, or the electric power system according to any aspect or embodiment for a time-efficient determination of control actions to be performed for congestion resolution.

Thereby, the effects of the method, the processing system, or the electric power system are utilized for power grid control.

According to a further aspect of the invention, there is provided a control method of controlling power grid assets, comprising performing the method for congestion resolution according to any aspect or embodiment to determine control actions to be performed for the power grid assets.

Thereby, the effects of the method are utilized for power grid control.

According to a further aspect of the invention, there is provided a power grid control system for controlling a power grid, comprising the processing system according to any aspect or embodiment operative to determine control actions to be performed for the power grid assets.

Thereby, the effects of the processing system are utilized for power grid control.

According to a further aspect of the invention, there is disclosed a use method of using the method, the processing system, or the electric power system according to any aspect or embodiment for a determination of control actions to be performed for congestion resolution using an iterative method that approximates, in each of several iterations, a magnitude of an electrical quantity (such as a magnitude of a current) based on a phase angle of the electrical quantity and at least one of real and/or imaginary parts of the electrical quantity.

Thereby, the effects of the method, the processing system, or the electric power system are utilized for power grid control.

According to a further aspect of the invention, there is provided instruction code which, upon execution by at least one processing circuit, causes the at least one processing circuit to perform the method of any aspect or embodiment.

Thereby, the effects disclosed in association with the method are provided by means of the instruction code executable by a programmable processing circuit or several programmable processing circuits.

According to a further aspect of the invention, there is provided a non-transitory storage medium storing instruction code which, upon execution by at least one processing circuit, causes the at least one processing circuit to perform the method of any aspect or embodiment.

Thereby, the effects disclosed in association with the method are provided by means of the storage medium storing instruction code executable by a programmable processing circuit or several programmable processing circuits.

Various effects and advantages are attained by embodiments of the invention. For illustration, the methods and processing systems according to embodiments provide enhanced techniques of resolving congestions. The methods, processing systems, and electric power systems are operative to perform congestion resolution in an efficient manner, even when the power grid comprises unsymmetrical assets, there exist unbalanced situations, and/or there are high voltage deviations between adjacent branches. The methods, processing systems, and systems are operative to determine which assets are to be curtailed and/or how the assets are to be curtailed to resolve the congestion. The methods, processing systems, and electric power systems can be used in association with an electric power grid (e.g., a distribution grid) having renewable energy sources and/or battery-based or mechanical energy storage systems (or other loads coupled to the distribution grid in a time-dependent, controllable manner), without being limited thereto.

### BRIEF DESCRIPTION OF THE DRAWINGS

Embodiments of the invention will be described with reference to the drawings in which similar or identical reference signs designate elements with similar or identical configuration and/or function.
Fig. 1 is a schematic representation of an electric power system comprising a power grid.
Fig. 2 is a block diagram of processing circuit(s) of a processing system of the electric power system.
Fig. 3 is a block diagram of a processing system of the electric power system.
Fig. 4 is a block diagram of a processing system of the electric power system.
Fig. 5 is a flow chart of a method of performing a congestion resolution.
Fig. 6 is a flow chart of a method of performing a congestion resolution.
Fig. 7 is a schematic representation of an electrical quantity.
Fig. 8 is a schematic representation illustrating processing performed by the processing system and in the method of performing a congestion resolution.
Fig. 9 is a flow chart of a process that may be used in the method of performing a congestion resolution.
Fig. 10 is a flow chart of a method of performing a congestion resolution.
Fig. 11 is a schematic representation of a star-connected asset of the power grid.
Fig. 12 is a schematic representation of a star-connected asset of the power grid.
Fig. 13 is a flow chart of a method of performing a congestion resolution.
Fig. 14 is a flow chart of a method of performing a congestion resolution.
Fig. 15 is a block diagram of processing circuit(s) of the processing system for performing the congestion resolution.
Fig. 16 is a schematic representation of a twin feeder power grid.
Fig. 17 shows performance of the method and processing system for performing congestion resolution for the power grid of Fig. 16 when starting with a strongly overloaded operating point.
Fig. 18 is a schematic representation of an electric power system comprising the processing system for performing a congestion resolution.
Fig. 19 is a schematic representation of an electric power system comprising the processing system for performing a congestion resolution.
Fig. 20 is a flow chart of a use method.
Fig. 21 is a flow chart of another use method.
Fig. 22 is a block diagram of an electric power system comprising the processing system and a control system.
Fig. 23 is a block diagram of an electric power system comprising the processing system and a control system.

### DETAILED DESCRIPTION OF EMBODIMENTS

Embodiments of the invention will be described with reference to the drawings. In the drawings, similar or identical reference signs designate elements with similar or identical configuration and/or function.

While embodiments will be described in association with processing systems and methods of determining setpoints of generators and/or loads, the embodiments are not limited thereto. The techniques disclosed herein may be used to determine other settings, such as a timing of time-dependent coupling operations. The determined setpoints or other settings may be applied to modify the operation of a power grid (e.g., of a distribution grid) under a control of a distribution system control system.

While embodiments will be described in association with a power grid (e.g., a distribution grid) having power generating units comprising renewable energy resources, the embodiments are not limited thereto.

In accordance with embodiments, there are provided methods and processing systems operative to perform an iterative method to determine settings (such as setpoints) for generators and/or loads of a distribution system. The methods and processing system may be operative to automatically determine which assets (generators and/or loads) are to be controlled and how the respective assets are to be controlled to resolve a congestion in the power grid.

According to embodiments, the iterative method comprises approximating a magnitude of an electrical quantity (with the magnitude influencing an optimization problem, such as a LP or MILP problem that is solved to resolve the congestion) based on a phase angle of the electrical quantity (such as a phase angle of a current phasor) to thereby establish a linearized correlation of the magnitude of the electrical quantity and grid node conditions (such as active and reactive power deviations). The linearized correlation is an approximation, with the dependence of the magnitude on the grid node conditions being generally non-linear. The linearized correlation facilitates determining adjustments to grid node conditions using linear manipulation techniques (such as solving linear relationships only), to thereby reduce or eliminate the congestion. Iterative repetitions of the process provide continual improvement of the adjustments to determine settings (e.g., setpoints) to resolve the congestion when the magnitude of the electrical quantity is approximated by means of the linearized correlations.

According to embodiments, determining the linearized correlation may be repeated in each iteration, as the adjustments determined in a preceding iteration (but not yet applied to the assets while the iterative method is being continued) can influence the phase angle.

According to embodiments, the iterative method comprises determining and using transformation matrices that that map active and reactive phase-to-phase power deviations for delta-connected assets of the power grid to power deviations for star-connected assets with respect to ground reference. This facilitates establishing a linear problem for determining the adjustments of the grid node conditions for which a solution can be computed using linear manipulation techniques (such as solving linear relationships only), to thereby reduce or eliminate the congestion. Iterative repetitions of the process provide continual improvement of the adjustments to determine settings (e.g., setpoints) to resolve the congestion, with the transformation matrices being re-computed in subsequent iterations to account for changes in operating point based on adjustments determined in at least one preceding iteration.

According to embodiments, determining the linearized correlation may be repeated in each iteration, as the adjustments determined in a preceding iteration (but not yet applied to the assets while the iterative method is being continued) can influence the transformation matrices.

According to embodiments, the methods and processing systems are operative to perform congestion resolution without requiring and/or without using an OPF (e.g., without requiring and/or without using a full OPF).

Methods and processing systems disclosed herein are operative to determine settings (such as setpoints) for generators and/or loads that resolve an identified congestion. The methods and processing systems employ a transfer distribution factor (TDF)-based approach. More specifically, the methods and processing systems may be operative to employ a multi-phase augmented current transfer distribution actor (MA-CTDF) based approach. The MA-CTDF is different from conventional PTDF-approaches in that it can situations such as power grids comprising unsymmetrical assets, by providing a model that establishes (approximative) linear correlations between magnitudes of electrical quantities having a magnitude and a phase (such as a current phasor) and grid node conditions (such as active and reactive power deviations at grid nodes).

As used herein, the terms "determining" and "determine" encompass an approximate determination of the respective quantity, such as an estimation of the respective quantity. Determining settings or adjustments may comprise both determining which power grid assets are to be controlled and how (e.g., to which setpoint) the respective power grid assets are to be controlled to resolve the congestion.

As used herein, the term "congestion" refers to a situation in which there is a branch overcurrent and/or another operating range violation. The congestion may comprise a congestion of a branch (e.g., a branch overcurrent) and/or a voltage range violation. The congestion may be a situation in which a power grid overload prevents electricity from reaching a consumer. The congestion may comprise a congestion that already exists at runtime operation of the processing system and/or execution of the method according to an embodiment. The congestion may comprise a congestion that is predicted to exist at a time period in the future as compared to the runtime operation of the processing system and/or execution of the method according to an embodiment. In particular, the congestion resolution disclosed herein may also be used for reserve planning.

As used herein, the term "congestion resolution" refers to the determination, optionally also the execution, of actions suitable to eliminate a presently existing congestion or suitable to prevent a congestion from occurring (that would occur or can occur absent the congestion resolution).

As used herein, the term "TDF" matrix encompasses a MA-CTDF sensitivity matrix that establishes a linear correlation between a magnitude of an electrical quantity that is defined by both its magnitude and a phase angle. Branch current is an example for such an electrical quantity.

As used herein, the term "phase angle" of an electrical quantity refers to an argument α of an electrical quantity represented as a complex-valued quantity |D| exp(*jα*), where D denotes an electrical quantity (such as a branch current I), j denotes the imaginary unit, |D| denotes the magnitude of the electrical quantity, and *α* = arg (D) denotes the phase angle. The phase angle may be obtained from an operating point, which may in turn be obtained from, e.g., a power flow solution and/or from measurements acquired in the power grid.

As used herein, a "PLU decomposition" or "PLU factorization" refers to a factorization technique used to decompose a given square matrix into three distinct components: a permutation matrix (P), a lower triangular matrix (L), and an upper triangular matrix (U).

The techniques disclosed herein are operative to facilitate operation of a distribution grid by providing automated techniques of determining settings that resolve a congestion in the distribution grid. As used herein, the term "distribution grid" encompasses in particular a distribution grid operative to transmit power at voltages of from 2kV to 220 kV, such as a high voltage distribution grid (where voltages are typically between 60 kV and 220 kV) or a medium voltage distribution grid (where voltages may be, e.g., between 6 kV and 60 kV). The distribution grid (or more generally, the power grid) may comprise generators based on renewable energy resources (such as one or several distributed energy resources (DERs) configured in a manner compatible with IEEE 1547-2018, without being limited thereto).

As used herein, "unsymmetrical assets" encompass assets that do not have equal characteristics or performance across all phases.

As used herein, the term "power" refers to electric power unless explicitly stated otherwise.

The processing methods, processing systems, control methods and control systems disclosed herein may be applied to an entire power grid (e.g., an entire distribution grid) or any section of the power grid.

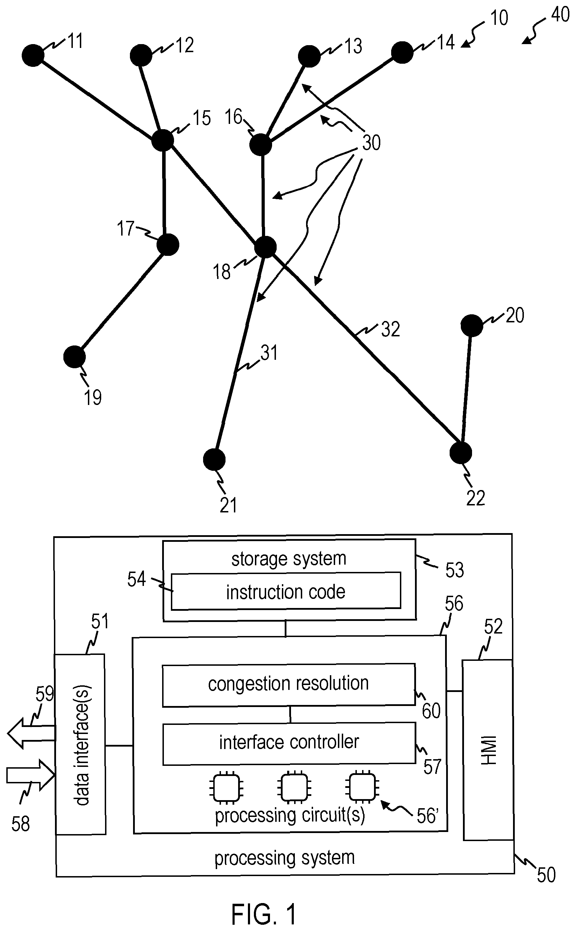

Fig. 1 shows a schematic representation of an electric power system 40 comprising a processing system 50 according to an embodiment. The electric power system 40 comprises a power grid 10. The power grid 10 may be a distribution grid. The power grid 10 comprises a plurality of grid nodes 11-22. The plurality of grid nodes comprises controllable assets. The controllable assets may comprise unsymmetrical assets or other assets that make it challenging to resolve congestions in the power grid 10 using legacy techniques while avoiding the complexity and time required for performing a full OPF. The controllable assets may comprise DER, PV generators, wind turbines, battery energy storage systems (BESS), electric vehicle (EV) charging stations, or other assets. The power grid 10 comprises a plurality of branches 30. The plurality of branches 30 may comprise or may be one-, bi-, and/or three-phase overhead lines (OHL) and/or cables. The plurality of branches 30 may comprise branches having different numbers of phases.

Operating conditions may result in one or several branches of the plurality of branches 30 being congested branches 31, 32, e.g., branches in which there is an overcurrent situation (when applying the processing discussed in detail herein during field operation of the power grid) or in which an overcurrent is predicted to occur (when applying the processing for predictive control, e.g., for operation reserve planning).

To address this issue, which has the potential of causing damage, the electric power system 40 comprises the processing system 50. The processing system 50 may be, or may be comprised by, a power grid control system (e.g., a distribution grid control system). The processing system 50 may be communicatively interfaced with the power grid control system (e.g., a distribution grid control system). The processing system 50 may be implemented as a distributed processing system and/or may comprise several computing devices. The processing system 50 comprises one or several data interfaces 51 operative to receive input 58 (such as measurements acquired by measurement instrumentation on the power grid 10) and to provide output 59. The output 59 may comprise control data generated to resolve the congestion. The processing system 50 may comprise a human machine interface (HMI) 52. The processing system 50 comprises a storage system 53 operative to store instruction code 54 which, upon execution by at least one processing circuit 56 of the processing system 50, causes the at least one processing circuit 56 to operate as disclosed in detail herein. The at least one processing circuit 56 may comprise several integrated circuits 56', which may be operative to perform parallel processing operations. The at least one processing circuit 56 may be operative to perform a congestion resolution 60, using a process that is iteratively repeated to determine settings for power grid assets that resolve the congestion. The at least one processing circuit 56 may comprise an interface controller 57 operative to control the at least one data interface 51 to output control data, based on the processing of the congestion resolution 60. Alternatively or additionally, the interface controller 57 may be operative to control the HMI 52 based on the processing of the congestion resolution 60 to enable an operator input that allows or triggers settings to be applied that were determined by the congestion resolution 60.

To perform the operations discussed herein, the at least one processing circuit 60 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

Solving a power flow problem conventionally implies solving a set of non-linear equations. The set of equations expresses the stationary equilibrium point of an electrical circuit 10. The stationary equilibrium point expresses the voltage and current values over a set of buses and branches in an electrical system (single or multiphase). Due to the sinusoidal stationary equilibrium point, parameters and variables are expressed as complex numbers.

There are various ways to express equilibrium points in an electrical system. In some embodiments disclosed herein, the methods and processing systems consider bus power balance (apparent power s, equal to voltage v multiplied by current i conjugated), expressed in polar coordinates, which is well accepted and known in the power system domain.

Independently of the specific implementation of how equilibrium points are expressed, techniques that address congestions and control techniques for resolving the congestion must consider and deal with the nonlinearities introduced by the grid models. Such nonlinearities can be negligible when corrective actions are small (i.e., small with respect to the nominal system units) and thus, a linear relationship can be defined between the controlling and controlled electrical quantities (power, voltage and current). The techniques disclosed herein use linearization in combination with iterative techniques to resolve congestions, particularly (but not limited to) distribution grids. The model-based linearized methods use a full system description, that means (in the context of the processing systems and methods disclosed herein) an admittance matrix of the electrical system and its operating point.

Thus, the processing system 50 and the methods can process an admittance matrix of active and passive components of the power grid 10. The storage system 53 may have stored the admittance matrix therein. The admittance matrix provides information on grid topology (without making any assumption about radial or meshed grids or being limited to any particular grid topology) and the electrical circuit parameters for the relationship between voltages and currents. The admittance matrix is processed by the processing system 50. The admittance matrix may be a complex matrix that has matrix elements with respect to buses and phases.

The processing system 50 and the methods may be operative to perform a power flow processing (but not necessarily an OPF) based on the admittance matrix to determine the operating point. Thereby, congested branches can be identified. The processing system 50 and methods may be operative to use an ampacity for each branch/phase in the power grid 10 to determine the congested branches based on both the power flow solution and the ampacity.

The processing system 50 and the methods may be operative to process, for at least each overloaded branch of the plurality of branches 30 (e.g., OHL (Overhead line), cable, OLTC (On-line TAP changer), power transformers) a primitive admittance matrix (related to the current configuration in case of OLTC). The storage system 53 may have stored therein the primitive admittance matrices of the branches 30.

The processing system 50 and methods may also be operative to use information on which of the assets of the power grid 10 are controllable. The storage system 53 may have stored therein data indicating which of the assets of the power grid 10 are controllable for congestion resolution and, optionally, possible settings for the assets. The data relating to controllable assets may also comprise connection setup data specifying a phase and whether the asset is star- (i.e., Wye-) or delta-connected.

The processing system 50 is operative to determine a matrix (also referred to as TDF matrix herein) that has a number N of rows that is dependent on (e.g., equal to or equal to an integer multiple of) a number of overloaded branches/phases and that has a number M of columns dependent on (e.g., equal to or equal to an integer multiple of) a number of controllable assets (e.g., loads and/or generators) that are controllable to resolve the congestion. The TDF matrix can also be referred to as an MA-CTDF sensitivity matrix, which defines, for at least one of the overloaded branches (optionally for several or each of the overloaded branches), a linearized correlation of a magnitude of a branch current for the respective branch and the grid node conditions (e.g., active and reactive phase deviations) at the controllable assets (e.g., controllable generators and controllable loads).

The processing system 50 is operative to perform linear processing, such as matrix multiplication and/or PLU decomposition techniques to determine the TDF matrix. The processing system 50 may additionally be operative to perform non-linear trigonometric data manipulation in the processing, in dependence on the phase angles of electrical quantities for the overloaded branches.

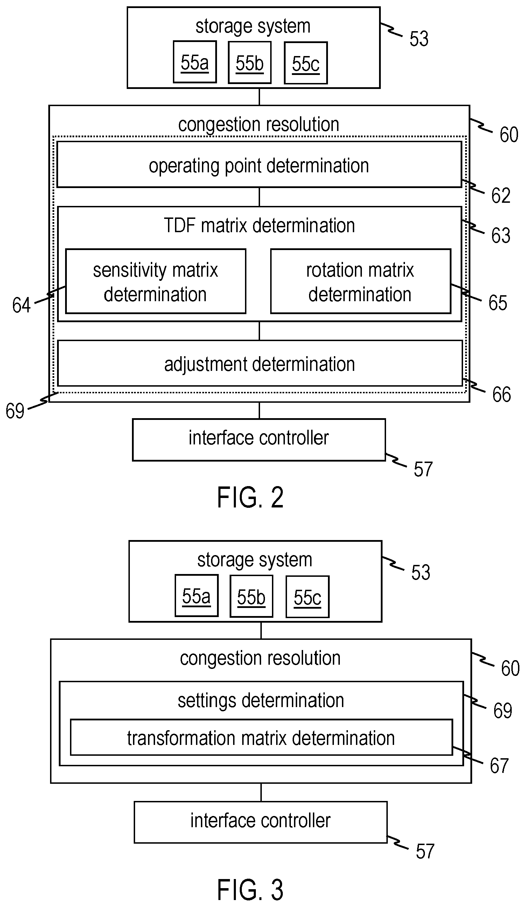

Fig. 2, Fig. 3, and Fig. 4 are schematic block diagrams of the processing system 50 provided for a more detailed explanation of the operation of the processing system 50 and of the method executed thereby.

Fig. 2 shows a block diagram representation of the processing system 50 according to an embodiment. The storage system 53 has stored therein admittance matrix data 55a specifying the admittance matrix. The admittance matrix data 55a provides information on grid topology (without making any assumption about radial or meshed grids or being limited to any particular grid topology) and the electrical circuit parameters for the relationship between voltages and currents. The storage system 53 has stored therein primitive admittance matrix data 55b for each branch of the plurality of branches 30 (e.g., OHL, cable, OLTC, power transformers). In case of an OLTC, the primitive admittance matrix is related to the current configuration of the OLTC. The storage system 53 has stored therein controllable asset data 55c indicative of which of the assets of the power grid 10 are controllable for congestion resolution. The controllable asset data 55c may comprise possible settings for the assets. The controllable asset data 55c may also specify whether the asset is star- (i.e., Wye-) or delta-connected. Thus, the controllable asset data 55c may specify a connection setup with respect to phase for a multi-phase configuration.

The at least one processing circuit 56 is operative to implement the congestion resolution 60, based on the admittance matrix data 55a, the primitive admittance matrix data 55b, and the controllable asset data 55c. The at least one processing circuit 56 is operative such that the congestion resolution 60 includes a settings determination 69 that determines settings to be applied to the controllable assets to resolve the congestion. The at least one processing circuit 56 is operative to iteratively invoke a process that comprises an operating point determination 62, which may be performed based on a power flow solution that can be performed by a conventional power flow solver. The process may further comprise a TDF matrix determination 63. The TDF matrix determination 63 may comprise a projection (e.g., by way of a matrix multiplication by a rotation matrix) to establish a linearized (i.e., generally approximative) correlation of an electrical quantity for an overloaded branch and grid node conditions. The TDF matrix determination 63 may be operative to determine, at the operating point determined by the operating point determined 62, a sensitivity matrix that establishes a linear relationship of both the real part and the imaginary part of the electrical quantity for the overloaded branch and power grid conditions (such as active and reactive power deviations at grid nodes at which there are controllable assets; and/or voltage magnitude and voltage phase for such grid nodes). The sensitivity matrix determination 64 may be operative to perform matrix multiplication, PLU decomposition, and matrix inversion to determine the sensitivity matrix, based on the admittance matrix data 55a, the primitive admittance matrix data 55b. The sensitivity matrix determination 64 may also determine the sensitivity matrix based on the controllable asset data 55c and, in particular, by applying a transformation matrix for delta-connected controllable assets to map powers for the controllable delta-connected assets to power for star-connected controllable assets with respect to the ground reference.

To determine the TDF matrix, the TDF matrix determination 63 may be operative to perform a phase angle-dependent projection operation that is dependent on a phase angle of the electrical quantity for the overloaded branch. The phase angle-dependent projection establishes the linearized (i.e., approximative) correlation of the magnitude of the electrical quantity and the grid node conditions. The projection may be implemented as a multiplication by a rotation matrix that is dependent on the phase angle. The TDF matrix determination 63 may comprise a rotation matrix determination 63, which is based on the phase angle of the electrical quantity and that effectively determines projections of the real and/or imaginary parts of the electrical quantity onto the phasor of the electrical quantity in the plane spanned by the real and imaginary parts of the electrical quantity.

The congestion resolution 60 may comprise an adjustment determination 66 that determines the settings of the controllable assets that, based on the TDF matrix provided by the TDF matrix determination 62, would mitigate the congestion. The determination of the adjustments may be performed using linear manipulation techniques, such as solving a linear equation set, solving a LP problem, or solving a MILP problem. Due to the linearization, the adjustments when put back into the power flow solver need not necessarily result in an operating point that does not have any congestions left. By iteratively invoking the operating point determination 61, the TDF matrix determination 63, and the adjustment determination 66 until all overloaded branches are back to their permitted ampacity or other operating range (as verified by, e.g., the power flow solver), the congestion resolution 60 determines the settings that are to be applied to the controllable assets. The interface controller 57 may cause or perform a control action based on the thus determined settings, which are the asset settings as determined in the most recent iteration of the iterative method.

Fig. 3 shows a block diagram representation of the processing system 50 according to an embodiment. The processing system 50 is operative to perform a settings determination 69 which may comprise determining a linearized correlation between a magnitude of an electrical quantity and grid node conditions in combination with an iterative refinement of adjustments to be made to the grid node conditions. The settings determination 69 may be performed as explained with reference to Fig. 2, without being limited thereto. The settings determination 69 may comprise, in each iteration of the iterative method, a transformation matrix determination 67 that determines, for each controllable delta-connected asset and at the operating point determined (e.g., based on the power flow solver), a transformation matrix for delta-connected controllable assets that maps powers for the respective controllable delta-connected asset to powers for a star-connected controllable assets with respect to the ground reference. The transformation matrix determination 67 may be operative to determine the transformation matrices based on the controllable asset data 55c and for the operating point (e.g., voltages) determined by the power flow solver.

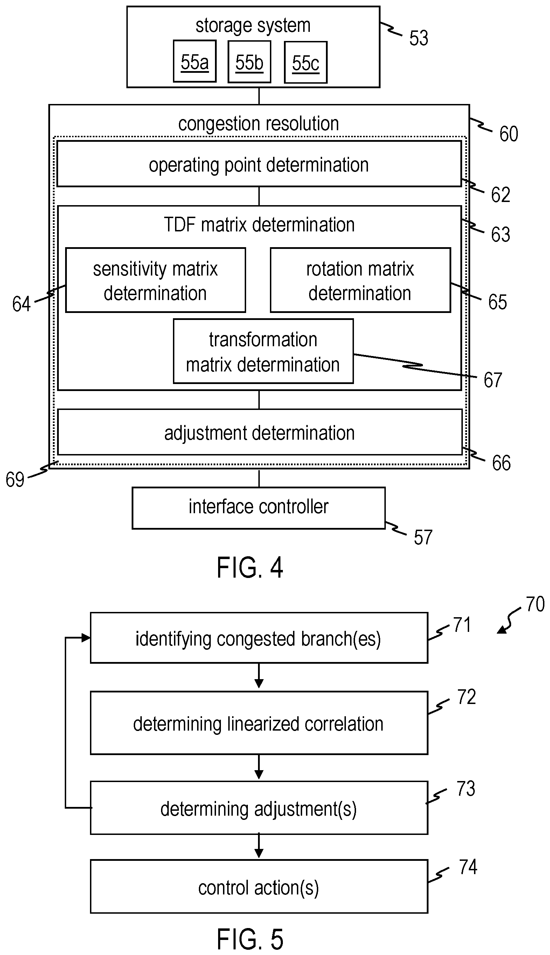

Fig. 4 shows a block diagram representation of the processing system 50 according to an embodiment. The processing system 50 is operative such that the TDF matrix determination 62 comprises the determination of transformation matrices by the transformation matrix determination for delta-connected controllable assets. The transformation matrix determination 67 is operative to determine the transformation matrices such that they map powers for each controllable delta-connected asset to powers for a star-connected controllable assets with respect to the ground reference. The transformation matrix determination 67 may be operative to determine the transformation matrices based on the controllable asset data 55c and for the operating point (e.g., voltages) determined by the power flow solver. The processing system 50 is also operative such that the TDF matrix determination 62 comprises the determination and application of a projection that projects real and imaginary parts of an electrical quantity having a complex-valued representation, so as to determine the projections onto the phasor of the electrical quantity in the coordinate system spanned by the real and imaginary parts of the electrical quantity.

While linear models are established in electrical power system control, the processing system 50 and methods according to embodiments provide a particular technique to generate the TDF matrix and/or the LP or MILP problem that can then be solved using conventional techniques. The processing system 50 and methods are generally operative to execute (in particular in an iterative manner) a process that comprises:
Transforming Delta connect assets in equivalent Wye one (to have direct correlation with the power flow over the phases)
Linearization of complex voltage deviations (over the entire system) due to bus power deviations Linearization of the current deviations (over the overloaded branches) due to complex voltage deviation
Rotation of the current deviations (complex quantity) to be aligned to the current phasor to consider the component that alternates the magnitude and not the direction of the current phasor. The processing system 50 and methods may be operative to perform these operations to determine an (approximated) linear relationship of relative deviations between the bus power and a magnitude of a phase current.

Based on the admittance matrix and power flow results (i.e., the electric circuit state variable), the processing system 50 and method can determine the so-called Jacobian matrix J. The Jacobian matrix may also be used by and/or provided by the power flow solver in case the power flow solver operates based on a Newton-Raphson technique. For a multiphase system, the Jacobian matrix J is defined as: $\left[\begin{matrix}Δ P \\ Δ Q\end{matrix}\right] = \left[\begin{matrix}\frac{\partial P}{\partial ϑ} & \frac{\partial P}{\partial V} \\ \frac{\partial Q}{\partial ϑ} & \frac{\partial Q}{\partial V}\end{matrix}\right] \left[\begin{matrix}Δ ϑ \\ Δ V\end{matrix}\right] = J \left[\begin{matrix}Δ ϑ \\ Δ V\end{matrix}\right]$ (1) where P and Q are the active and reactive bus/phase power injections (e.g., in vector form with the vectors comprising the active and reactive bus/phase power injections for several power grid nodes) and ϑ and V are the phase angles and voltage magnitudes of the bus/phase voltages. The block matrices of the Jacobian matrix are partial derivatives of the active and reactive power injections with respect to voltage phase and voltage magnitude.

In the following, a subscript "0" designates an original solution of a power flow problem as working or operating point, and a subscript "1" refers to a new working condition when there are active and/or reactive power deviations. In this case, a linear relationship of voltage magnitude and voltage phase that results from the power deviations can be calculated as: $\left[\begin{matrix}{ϑ}_{1} \\ {V}_{1}\end{matrix}\right] = {\left[\begin{matrix}\frac{\partial P}{\partial ϑ} & \frac{\partial P}{\partial V} \\ \frac{\partial Q}{\partial ϑ} & \frac{\partial Q}{\partial V}\end{matrix}\right]}^{- 1} \left[\begin{matrix}Δ P \\ Δ Q\end{matrix}\right] + \left[\begin{matrix}{ϑ}_{0} \\ {V}_{0}\end{matrix}\right] = {J}^{- 1} \left[\begin{matrix}Δ P \\ Δ Q\end{matrix}\right] + \left[\begin{matrix}{ϑ}_{0} \\ {V}_{0}\end{matrix}\right]$ (2) where related slack bus(es) rows-columns have been removed to avoid a matrix singularity. By means of an additional algebraic slack variables (voltage) can be separated from the system parameters (nodal power). The analytical formulation of the Jacobian matrix is provided below: $\left\{\begin{matrix}\frac{\partial P}{\partial ϑ} = ℜ \left\{j⋅diag\left(\overline{V}\right)⋅{\left(diag\left(\overline{I}\right)-\overline{Y}⋅diag\left(\overline{V}\right)\right)}^{∗}\right\} \\ \frac{\partial Q}{\partial ϑ} = ℑ \left\{j⋅diag\left(\overline{V}\right)⋅{\left(diag\left(\overline{I}\right)-\overline{Y}⋅diag\left(\overline{V}\right)\right)}^{∗}\right\} \\ \frac{\partial P}{\partial ϑ} = ℜ \left\{diag\left(\overline{V}\right)⋅{\left(\overline{Y}⋅diag\left(\frac{\overline{V}}{\left|\overline{V}\right|}\right)\right)}^{∗}+diag\left(\overline{I}\right)*⋅diag\left(\frac{\overline{V}}{\left|\overline{V}\right|}\right)\right\} \\ \frac{\partial Q}{\partial ϑ} = ℑ \left\{diag\left(\overline{V}\right)⋅{\left(\overline{Y}⋅diag\left(\frac{\overline{V}}{\left|\overline{V}\right|}\right)\right)}^{∗}+diag\left(\overline{I}\right)*⋅diag\left(\frac{\overline{V}}{\left|\overline{V}\right|}\right)\right\}\end{matrix}\right.$ (3)

This is a basic representation that is augmented in case there is an off-nominal OLTC setpoint if not already merged inside the admittance matrix. In Eq. (3), vectors *V̅ = Ve^{jϑ}, I̅ = Ie^{jα}* and matrix *Y̅* are complex-valued ∈ C, while *j* is the imaginary operator, the asterisk ( *) is the conjugate operations, and *diag*() is the diagonal operator.

It will be appreciated that Eq. (1), (2), and (3) are general system analysis considerations for the overall system.

For single element modelling (e.g., for modelling a grid branch), the following considerations hold. Considering a multiterminal branch, a current injection in each terminal can be calculated as: ${\overline{I}}_{b} = {\overline{Y}}_{b} {\overline{V}}_{b}$ (4) where, in the case of three phases (ABC), *Y̅_{b}* will have the dimension 6x6 (three entries for the from bus and three entries for the to bus), in case of bi-phases (AB, BC or CA) it will be 2x2 matrix and in case of single phase (A, B or C) it will be 1x1 matrix. The subscript "b" refers to branch. The parameter *I̅_{b}* designates the current injections for the various phases (in vector representation). The quantity *V̅_{b}* designates phase voltage with reference to the ground reference. The matrix *Y̅_{b}* is a primitive admittance matrix for the respective branch. The Jacobian matrix is related to a current deviation over a generic branch and can be represented as follows: $\left[\begin{matrix}ℜ \left\{Δ{\overline{I}}_{b}\right\} \\ ℑ \left\{Δ{\overline{I}}_{b}\right\}\end{matrix}\right] = \left[\begin{matrix}ℜ \left\{\frac{\partial {\overline{I}}_{b}}{\partial {ϑ}_{b}}\right\} & ℜ \left\{\frac{\partial {\overline{I}}_{b}}{\partial {V}_{b}}\right\} \\ ℑ \left\{\frac{\partial {\overline{I}}_{b}}{\partial {ϑ}_{b}}\right\} & ℑ \left\{\frac{\partial {\overline{I}}_{b}}{\partial {V}_{b}}\right\}\end{matrix}\right] \left[\begin{matrix}Δ {ϑ}_{b} \\ Δ {V}_{b}\end{matrix}\right] = {J}_{b} \left[\begin{matrix}Δ {ϑ}_{b} \\ Δ {V}_{b}\end{matrix}\right]$ (5) where the macro blocks are (using the same nomenclature as above): $\frac{\partial {\overline{I}}_{b}}{\partial {ϑ}_{b}} = j {\overline{Y}}_{b} {V}_{b} {e}^{{jϑ}_{b}}$ (6) $\frac{\partial {\overline{I}}_{b}}{\partial {V}_{b}} = {\overline{Y}}_{b} {e}^{{jϑ}_{b}}$ (7)

The Jacobian matrix for the branch, *J_{b}*, is a 12x12 in case of three phase component, and in general, the Jacobian matrix *J_{b}* has a sparse structure composed by non-zero entry blocks (the primitive admittance of multi phases asset, in ABC phase frame, is a dense matrix).

A linearized updated branch current due to a power deviation Δ*P* or Δ*Q* with respect to the working conditions can be represented as follows: ${\overline{I}}_{b , 0} + Δ {\overline{I}}_{b} = {\overline{Y}}_{b} A \overline{{V}_{0}} + B {J}_{b , 0} {CJ}_{0}^{- 1} \left[\begin{matrix}Δ P \\ Δ Q\end{matrix}\right]$ (8) where matrix A maps the system complex voltage vector into the branch ending terminal (from and to), C is a matrix that maps system voltage angle and magnitude deviation into the branch ending terminal (from and to), and *B* is a matrix complex operator operative to combine real and imaginary deviation into a complex vector having complex-valued vector elements.

The element ${CJ}_{0}^{- 1}$ has system dimensions and implies a matrix inversion. If only a subset of branches is to be considered (e.g., only congested branches), only a subset of rows needs to be considered (referring to terminal bus/phases). In this case, a PLU decomposition can be used to determine a pseudo-inverse of the Jacobian matrix of the system, i.e., to determine ${CJ}_{0}^{- 1}$. Effectively, a linear system of equations can be solved iteratively by the processing system 50 and in the method to perform the PLU decomposition. Such PLU decomposition techniques and processes for PLU decomposition, as known to the skilled person, can be applied to determine ${CJ}_{0}^{- 1}$ in an efficient manner.

In many cases, a magnitude of an electrical quantity (e.g., a phase current magnitude of an overloaded branch) is what effects heating due to the Joule effect (where dissipated power is given by |*I*|² *R*) is responsible for the heating up of the grid assets, where |*I*| is the current magnitude and R is the resistance. With the current having a complex-valued representation, a deviation in grid node conditions (i.e., a non-zero Δ*P* and *ΔQ*) will affect its module (subscript *1*) as: $\left|{I}_{b , 1}\right| = \sqrt{{\left(ℜ\left\{{\overline{I}}_{b , 0}+{BJ}_{b , 0}{CJ}_{0}^{- 1}\left[\begin{matrix}Δ P \\ Δ Q\end{matrix}\right]\right\}\right)}^{2} + {\left(ℑ\left\{{\overline{I}}_{b , 0}+{BJ}_{b , 0}{CJ}_{0}^{- 1}\left[\begin{matrix}Δ P \\ Δ Q\end{matrix}\right]\right\}\right)}^{2}}$ (9) that is, clearly a non-linear relationship.

Such a non-linearity is a considerable challenge when trying to find adjustments that mitigate or eliminate the grid congestion, while avoiding performing a full OPF.

To address the challenge that a magnitude of an electrical quantity has a non-linear dependency on a deviation in grid node conditions (i.e., on active and reactive power deviations, Δ*P* and *ΔQ*)*,* the processing system 50 and method according to embodiments may be operative such that they approximate the change in magnitude of the electrical quantity of the branch that is caused by a change in grid node conditions (such as a change of active and reactive power deviations, Δ*P* and Δ*Q*, for grid nodes having a controllable asset) by a projection of the real and/or imaginary parts of the deviation over a direction of the complex phasor *I̅*_{*b,*0}*.* Such projections onto the direction of the complex phasor of the electrical quantity are the deviations that are responsible for the change in magnitude of the electrical quantity. The orthogonal deviations (i.e., the projections of the real and imaginary parts onto a direction perpendicular to the complex phasor) affect the phase angle but, to first order, not the magnitude of the electrical quantity. The projection can be represented by a partial rotation and anti-rotation of the 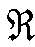 {*ΔI̅_{b}*} and 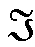 {Δ*I̅_{b}*} over the direction of *I̅*_{*b,*0}. Optionally, the orthogonal component (i.e., responsible for the phasor rotation) can also be determined and process to quantify and assess linearization errors. Thus, the magnitude of the electrical quantity for the congested branch can be approximated by $\left|{I}_{b , 1}\right| \approx \left|{I}_{b , 0}\right| + {E}_{b , 0} {BJ}_{b , 0} {CJ}_{0}^{- 1} \left[\begin{matrix}Δ P \\ Δ Q\end{matrix}\right]$ (10) where *E*_{*b,*0} is the (anti) rotation matrix in the complex plane spanned by the real and imaginary parts. Determining the matrix ${E}_{b , 0} {BJ}_{b , 0} {CJ}_{0}^{- 1}$ is a matrix-by-matrix multiplication, representing a linearized (i.e., approximative) relationship between bus power injection and deviations of a magnitude of an electrical quantity such as a branch current. The quantity ${E}_{b , 0} {BJ}_{b , 0} {CJ}_{0}^{- 1}$ is the TDF matrix that is obtained by applying the phase angle-dependent projection operator *E*_{*b,*0} to the sensitivity matrix ${J}_{b , 0} {CJ}_{0}^{- 1}$. The subscript "0" indicates that the respective quantities are determined for the original power flow solution (i.e., at the working point as determined by the power flow solver). For an electrical quantity that is a branch current, the matrix ${E}_{b , 0} {BJ}_{b , 0} {CJ}_{0}^{- 1}$ is a CTDF (Current Transfer Distribution Factor)). For a power grid having bi- or three-phase branches, the matrix ${E}_{b , 0} {BJ}_{b , 0} {CJ}_{0}^{- 1}$ is a multi-phase augmented CTDF matrix.

Thus, the processing system 50 and methods according to embodiments can be operative to: (a) determine the sensitivity matrix ${BJ}_{b , 0} {CJ}_{0}^{- 1}$, comprising the determination of a pseudo-inverse of the Jacobian matrix of the system, ${J}_{0}^{- 1}$, using that can be implemented using a PLU decomposition, and further based on the primitive admittance matrix *J*_{*b*,0} of the respective branch at the working point; and (b) determine a projection operator *E*_{*b,*0} onto a direction determined by the phasor of the electrical quantity at the (undisturbed) working point (as indicated by the subscript 0) to thereby establish a linearized correlation of the change in magnitude and the changes in active and reactive power at grid nodes that are controllable to resolve the congestion.

For delta-connected loads and/or delta-connected generators, an additional transformation is applied to facilitate handling these assets in a same way as star-connected assets. In general, PF (Power Flow) solver provide voltages with respect to neutral (grounded or not). In presence of isolated multi-phases without neutral, the meaning of single voltage is fictitious (what is important is the phase-to-phase voltages). In this case, or in the case of delta-connected load/generator, the current does not flow over the neutral cable. Thus, a further condition over phase currents is defined for the bus power.

The general power for a delta-connected asset to phases ij is defined as: ${S}_{ij} = \left({V}_{i}-{V}_{j}\right) ∗ {I}_{i}^{∗}$ (11)

By re-ordering the equations for a three-phase system, we can obtain in matrix form the total power for each phase: $\left[\begin{matrix}{S}_{a} \\ {S}_{b} \\ {S}_{c}\end{matrix}\right] = Θ \left[\begin{matrix}{S}_{ab} \\ {S}_{bc} \\ {S}_{ca}\end{matrix}\right] + \left[\begin{matrix}{S}_{an} \\ {S}_{bn} \\ {S}_{cn}\end{matrix}\right]$ (12) Where *S_{ab,bc,ca}* are the power over delta connected assets and *S_{an,bn,cn}* are the power over the star connected assets. The operator *Θ* is a transformation matrix that is equal to: $Θ = \left[\begin{matrix}\frac{{V}_{an}}{{V}_{an} - {V}_{bn}} & 0 & \frac{{V}_{an}}{{V}_{an} - {V}_{cn}} \\ \frac{{V}_{bn}}{{V}_{bn} - {V}_{an}} & \frac{{V}_{bn}}{{V}_{bn} - {V}_{cn}} & 0 \\ 0 & \frac{{V}_{cn}}{{V}_{cn} - {V}_{bn}} & \frac{{V}_{cn}}{{V}_{cn} - {V}_{an}}\end{matrix}\right]$ (13) where *Vₐₙ, V_{bn},* and *V_{cn}* designate voltages with reference to ground reference. The operator *Θ* will be used in case of delta-connected assets (to be calculated at the working conditions). In case of nominal values, the operator *Θ* is equal to: $Θ = \frac{1}{\sqrt{3}} \left[\begin{matrix}{e}^{- j \frac{π}{6}} & 0 & {e}^{j \frac{π}{6}} \\ {e}^{j \frac{π}{6}} & {e}^{- j \frac{π}{6}} & 0 \\ 0 & {e}^{j \frac{π}{6}} & {e}^{- j \frac{π}{6}}\end{matrix}\right] = \frac{1}{2} \left[\begin{matrix}1 & 0 & 1 \\ 1 & 1 & 0 \\ 0 & 1 & 1\end{matrix}\right] + j \frac{\sqrt{3}}{6} \left[\begin{matrix}- 1 & 0 & 1 \\ 1 & - 1 & 0 \\ 0 & 1 & - 1\end{matrix}\right]$ (14) that means a delta- active power deviation is equally distributed over the connected phases (real part), while the imaginary part has an imbalance effect (one phase is reduced one is increased) by a factor or ~0.29. It is for this reason that the techniques disclosed herein determine and use the transformation matrix *Θ* for power grids comprising delta-connected assets. The determination and use of the transformation matrix *Θ* can be omitted, e.g., for power grids in which there are no delta-connected assets.

Fig. 5 is a flow chart of method 70 of performing congestion resolution. The method 70 may be performed automatically by or using the processing system 50 or by or using the electric power system 10.

At process block 71, the processing system identifies one or several congested branches of a power grid, e.g., of a distribution grid. Identifying the one or several congested branches may comprise determining a working point of the power grid, e.g., by performing a PF technique, and comparing the branch currents to the ampacities of the branches.

At process block 72, the processing system determines a linearized correlation of a change in magnitude of an electrical quantity of a congested branch and of power grid conditions. The linearized correlation may be a linearized (i.e., approximative) correlation that specifies how the magnitude of the electrical quantity varies, to first order, as a function of changes of active and reactive power injections at grid nodes. The linearized correlation is determined based on a phase angle of the phasor of the electrical quantity, at the working point determined at process block 71, in the complex plane spanned by the real and imaginary parts of the electrical quantity. The linearized correlation may be determined further based on a Jacobi matrix of the power grid (that may be limited to branches having congestions, at least when determining the pseud-inverse based on a PLU decomposition) and based on the primitive Jacobi matrix of the branch, as explained with reference to Eq. (10).

At process block 73, processing system determines adjustments that mitigate or eliminate the congestion based on the linearized correlation determined at process block 72. Determining the adjustments may comprise determining the adjustments as solutions of a linear set of equations that are dependent on the linearized correlation. Determining the adjustments may comprise determining the adjustments as solutions of a LP or MILP problem that is dependent on the linearized correlation.

The method 70 may comprise iteratively repeating process blocks 71, 72, and 73, until it is determined that the adjustments from the most recent iteration, when used as working point in the PF solver, resolve the congestion. These adjustments may then be used for establishing the settings for controllable assets.

At process block 74, the processing system generates and provides control data to effect a control action in dependence on the adjustments determined to resolve the congestion. The control data may comprise control data that cause outputting of the settings via at least one interface (e.g., via the data interface 51) and/or that cause control actions to be performed to implement the changes. When used for predictive techniques, the control data may be control data useful for operation reserve planning and/or other control data that mitigates the risk of congestions.

The method 70 does not necessarily require the determination of transformation matrices, e.g., when there are no delta-connected assets that need to be considered.

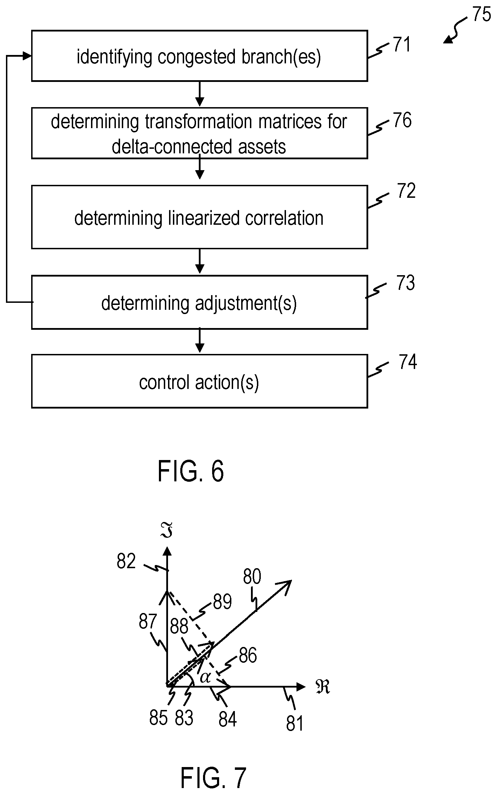

Fig. 6 is a flow chart of method 75 of performing congestion resolution. The method 75 may be performed automatically by or using the processing system 50 or by or using the electric power system 10.

At process block 71, the processing system identifies one or several congested branches of a power grid, as explained with reference to Fig. 5.

At process block 72, the processing system determines the transformation matrices for delta-connected assets (e.g., based on Eq. (13)) to map powers for the delta-connected assets to powers for star-connected assets with respect to ground reference. The transformation matrices may be used in one or several of process blocks 72, 73, 74, which may otherwise be performed as described with reference to Fig. 5.

Fig. 7 is a schematic representation that illustrates the determination of the linearized correlation in dependence on the phase angle of the phasor of the electrical quantity for the congested branch. The electrical quantity has a phasor 80 in the complex plane spanned by real and imaginary parts 81, 82 of the electrical quantity. The phasor 80 has a phase angle 83. The rotation matrix and/or the projection operator *E*_{*b,*0} is configured to determine a projection 85 of a real part 84 of a change in the electrical quantity onto the phasor 80. The anti-rotation matrix and/or projection operator *E*_{*b,*0} is configured to determine a projection 88 of an imaginary part 87 of a change in the electrical quantity onto the phasor 80. These projections 85, 88 of the real and imaginary parts determine, to first order, the changes in the magnitude of the phasor 80 that are caused by the changes in grid node conditions. Thus, the rotation matrix and/or projection operator *E*_{*b,*0} may be operative to multiply the real part of the change in the electrical quantity by cos (α) and to multiply the imaginary part by sin (α).

Optionally, the orthogonal parts 86, 89 that are orthogonal to the phasor 80 may also be determined. The orthogonal parts 86, 89 may be processed by the processing system 50 or in the methods disclosed herein to assess the effects of the linearization. The orthogonal parts 86, 89 may be determined by multiplication of the real part 84 of the change in the electrical quantity by sin (*α*) and by multiplication of the imaginary part by cos (*α*)*.*

Thus, the operator *E*_{*b,*0} may be considered a rotation matrix that rotates the real part counterclockwise by the phase angle, and that rotates the imaginary part clockwise by the phase angle to provide the projections onto and orthogonal to the phasor direction of the phasor 80.

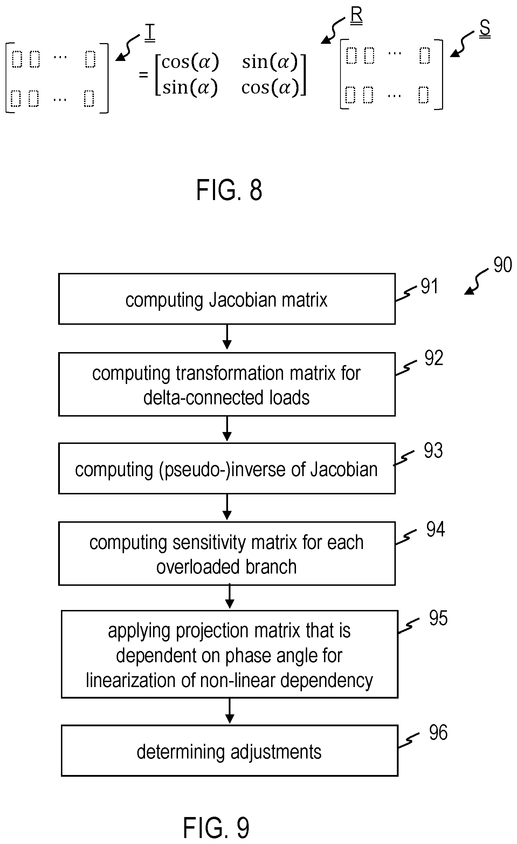

Fig. 8 is a schematic representation that illustrates that the processing system 50 and method may multiply an (anti-)rotation matrix R to the sensitivity matrix S to thereby determine the linearized correlation, quantifies by the TDF matrix T. If only the projection onto the phasor 80 is determined, and the orthogonal parts need not be determined (e.g., because no quantitative assessment of the linearization effect is performed by the processing system 50), only the first line of the matrix R can be used. The sensitivity matrix S may be determined as ${BJ}_{b , 0} {CJ}_{0}^{- 1}$ as explained with reference to Eq. (10).

Fig. 9 is a flow chart of method 90 of performing congestion resolution. The method 70 may be performed automatically by or using the processing system 50 or by or using the electric power system 10. The method 90 may be used in the methods of Fig. 5 and Fig. 6.

At process block 91, the processing system computes the Jacobian matrix *J*₀ of the power grid at the operating point. The determination of the Jacobian matrix *J*₀ of the power grid may also be performed inherently by the power flow solver that performs a PF computation to determine the working point.

At process block 92, the processing system computes the transformation matrices for delta-connected assets (e.g., based on Eq. (13)) to map powers for the delta-connected assets to powers for star-connected assets with respect to ground reference. The transformation matrices are respectively determined at the working point.

At process block 93, the processing system computes the pseudo-inverse ${J}_{0}^{- 1}$ of the Jacobian matrix. Computing the pseudo-inverse may comprise a PLU decomposition of the Jacobian matrix, wherein non-congested branches may be disregarded to further increase the efficiency of the congestion resolution.

At process block 94, the processing system computes the sensitivity matrix for each overloaded branch. Computing the sensitivity matrix may comprise computing the Jacobian matrix for the respective branch, based on the primitive admittance matrix for the respective branch and at the working point, and computing the sensitivity matrix based on the admittance matrix for the respective branch and the pseudo-inverse of the Jacobian matrix (e.g., based on Eq. (13)).

At process block 95, the processing system applies a projection (which may be implemented as an (anti-)rotation matrix) that is dependent on the phase angle 83 of the phasor 80 of the electrical quantity in the complex plane spanned by the real and imaginary parts 81, 82.

At process block 96, the processing system determines adjustments that mitigate or eliminate the congestion based on the linearized correlation determined by process blocks 94, 95. Determining the adjustments may comprise determining the adjustments as solutions of a linear set of equations that are dependent on the linearized correlation. Determining the adjustments may comprise determining the adjustments as solutions of a LP or MILP problem that is dependent on the linearized correlation.

The method 90 may comprise iteratively repeating process blocks 91-96, until it is determined that the adjustments from the most recent iteration, when used as working point in the PF solver, resolve the congestion. These adjustments may then be used for establishing the settings for controllable assets.

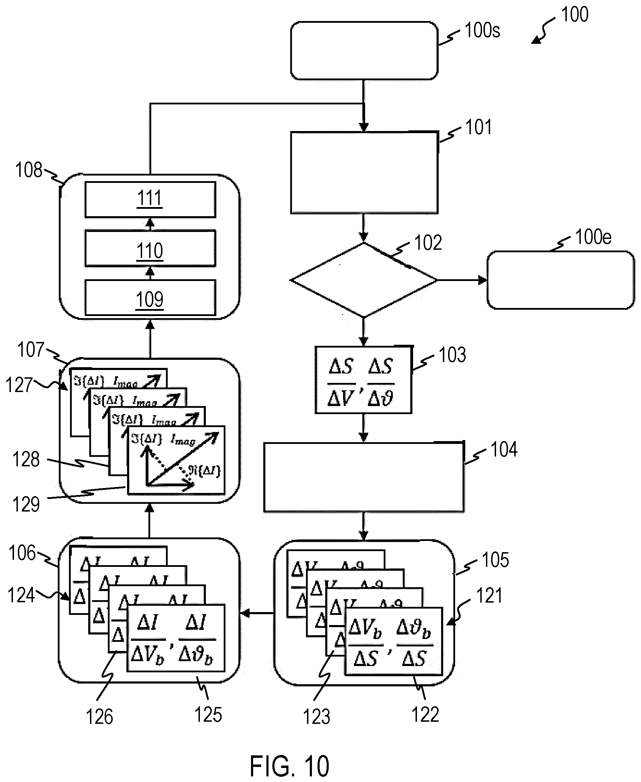

Fig. 10 is a flow chart of method 100 of performing congestion resolution. The method 100 may be performed automatically by or using the processing system 50 or by or using the electric power system 10. The method 100 may be used in the methods of Fig. 5, Fig. 6, and Fig. 9.

At process block 100s, the method starts.

At process block 101, the processing system executes a power flow engine to compute the working conditions of the power grid. The power flow engine may be operative to provide bus voltages, branch currents, the system admittance matrix and branch primitive admittance matrices.

At process block 102, it is determined whether there are branch overcurrents or other operating range violations. If no violations are discovered, no redispatch actions are needed and the method stops at process block 100e. Otherwise, the method proceeds to

At process block 103, the processing system computes the Jacobian matrix *J*₀ for the power grid.

At process block 104, for each controllable delta-connected load and/or delta connected generator, the transformation matrix *Θ* is determined to map its power into a phase frame of a star-connected asset with respect to ground reference.

At process block 105, a pseudo-inverse of the Jacobian matrix, ${J}_{0}^{- 1}$, for the power grid is calculated. That means that for each ending of each overloaded branch the related row (voltage module and angle) of the inverted Jacobian matrix is computed by the processing system. The processing system 50 may be operative such that it uses a single matrix factorization (e.g., PLU factorization) for the Jacobian matrix, ${J}_{0}^{- 1}$ and different right-hand sides can be applied in case of multiple overloaded branches/phases to determine a set of matrices 121 (that, in the terminology of Eq. (10), respectively correspond to or are based on ${CJ}_{0}^{- 1}$ where the operator *C* is different for different congested branches and/or phases). The determined matrices 122, 123 for different congested branches and/or phases are different, but are determined while using the same PLU factorization of the Jacobian matrix, ${J}_{0}^{- 1}$. This further contributes to the efficiency of the congestion resolution. Process block 105 can provide

At process block 125, for each overloaded branch, the processing system computes the sensitivity matrix 125, 126 that specifies changes in real and imaginary parts of an electrical quantity (e.g., of branch current) with respect to grid node conditions (e.g., voltage magnitude and voltage phase over its ends). Thereby, one or several sensitivity matrices 125, 126 are determined. The set of sensitivity matrices is schematically designated by reference numeral 124.

At process block 107, the processing system 50 determines and applies a projection that projects the changes in real and imaginary parts of the electrical quantity (e.g., of branch current) onto the phasor direction of the phasor 80 (e.g., of a current phasor). This may comprise a projection onto the direction of the current phasor. The projection matrices 127 may be rotation matrices 128, 129 that may be different for each overloaded branch and its terminals. The projection at process block 107 establishes a linearized correlation between the changes in the magnitude of the electrical quantity in dependence on the grid node conditions. The projection at process block 107 may be implemented such that only the part(s) of the deviation that change(s) the magnitude of the phasor of the electrical quantity are determined. The orthogonal direction can be used in the case of quadratic constraints programming and/or for putting an upper bound to limit the errors due to the linearization process.

At process block 108, adjustments are determined using, *inter alia,* the linearized correlation. The adjustments are determined such that they mitigate or eliminate the congestion. Various control schemes can be used to determine the adjustments.

In one implementation, the processing system establishes a LP problem at sub-block 109. The LP problem may be a MILP problem. The LP problem may comprise a constrained optimization problem, wherein a constraint is dependent on the matrices determined at process blocks 103-107. The processing system may solve the LP problem, which is based on the matrices as a set of inequality constraints. The solution provides a minimization of absolute load deviation (e.g., a L1, L2 or other LN minimization) with slack current variables to avoid infeasibilities. Various implementations of control strategies can be used.

In an embodiment, process block 108 may comprise a sub-block 110 of determining a solution for a minimization of absolute load deviation using a constraint that may be, e.g., formulated as: $A \left(Δ{L}^{+}-Δ{L}^{-}\right) + I \left(Δ{I}^{+}-Δ{I}^{-}\right) + {I}_{0} \leq {I}_{max}$ (15)

The matrix A represents a linear relationship between current magnitude and load deviation, *I* is the identity matrix, *I*₀ and *Iₘₐₓ* are a base and maximum current respectively and Δ*L*⁺, Δ*L*⁻, Δ*I*⁺, Δ*I*⁻ are the variable to be optimization with respect to load deviation (positive and negative) and slack current (positive and negative).

The objective function of the optimization problem that is generated and solved by the processing system may be a sum over all deviations, with a scaling penalty factor M for slack current deviations. A final load deviation Δ*L* = Δ*L*⁺ - Δ*L*⁻ may be computed by the processing system and may be applied to the power flow application at process block 101 in the next iteration. Furthermore, a load deviation upper bound may be set equal to the actual load consumption. In this case, the maximum deviation will be to turn off the load completely.

Process block 108 may comprise a sub-block 111 of applying settings that are based on the adjustments determined based on the LP problem. The sub-block 111 need not be executed in each iteration. The sub-block 111 may be executed selectively depending on a confirmation that the adjustments as determined do indeed resolve the congestion.

Process blocks 101-108 may be repeated iteratively.

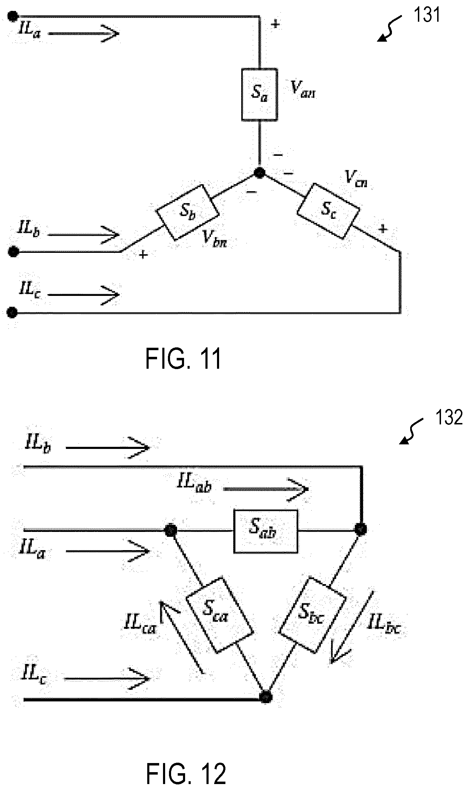

When the power grid 10 comprises delta-connected assets, the processing system 50 and the method according to embodiments is operative to determine transformation matrices to map powers for the delta-connected assets to those of star-connected assets with respect to ground reference. The power grid 10 may comprise both star-connected assets (with Fig. 11 showing a star-connected asset 131 with three phases) and delta-connected assets (with Fig. 12 showing a delta-connected asset 132). The transformation matrices may be determined as explained with reference to, e.g., Eq. (13). The determination and use of the transformation matrices is particularly useful in association with the determination of a linearized correlation but may be used more generally in association with congestion resolution in, e.g., a distribution grid.

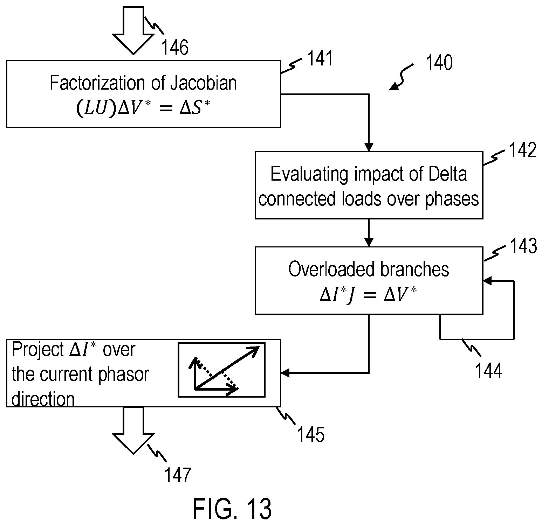

Fig. 13 is a flow chart of a process 140 useful for congestion resolution. The process 140 may be performed automatically by or using the processing system 50 or by or using the electric power system 10. The process 140 may be used in the methods according to any aspect or embodiment.

At process block 141, the processing system determines a LU decomposition of the Jacobian matrix. Determining the LU decomposition may comprise a PLU decomposition. The processing system may determine the LU decomposition based on input 146 that comprises the admittance matrix for the power grid and a working point (e.g., bus voltages and branch currents).

At process block 142, the processing system evaluates an impact of delta-connected loads on the processing. This may comprise determining and applying transformation matrices *θ* for each delta-connected load and/or delta-connected generator that is controllable to resolve the congestion.

At process block 143, the processing system determines the sensitivity matrices for each overloaded branch. This may comprise computing the pseudo-inverse of the Jacobian matrix of the power grid (where non-congested branches may be omitted). The processing system may execute a loop 144 to determine the sensitivity matrices for each overloaded branch.

At process block 145, the processing system determines the projection operator for projections onto the phasor 80 of the electrical quantity based on the phase angle of the phasor 80. The processing system applies the projection to establish the linearized correlation of the magnitude of the electrical quantity and grid node conditions.

The processing system may provide output 147 that is useful in determining how the settings of the controllable assets are to be adjusted (e.g., by means of creating and solving a LP or MILP problem having a constraint that is dependent on the linearized correlation). The output 147 may comprise control data that effect interface or primary system equipment control actions.

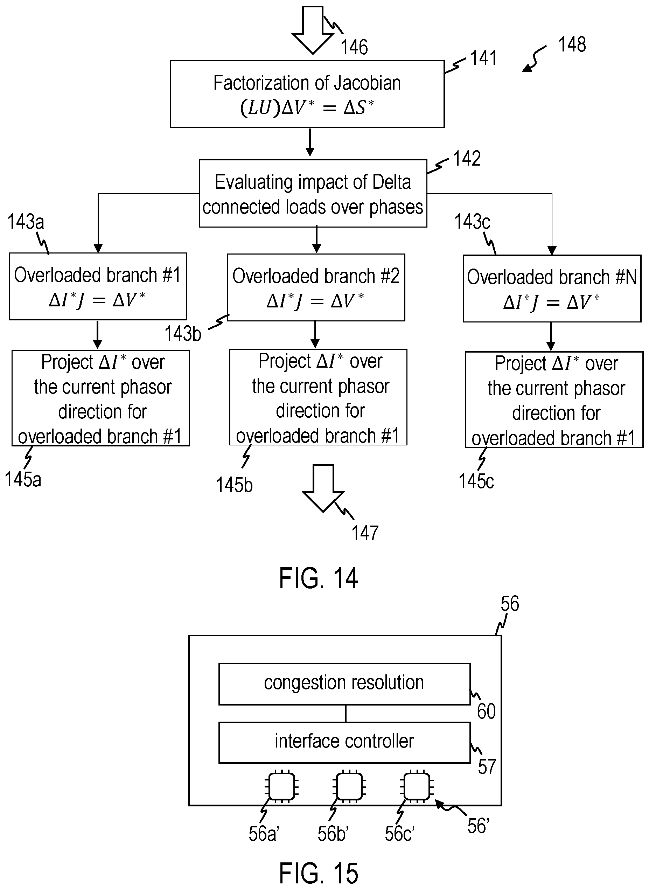

The methods and techniques disclosed herein are particularly suitable for implementation using parallel processing techniques, as further illustrated with reference to Fig. 14.

Fig. 14 is a flow chart of a process 148 useful for congestion resolution. The process 148 may be performed automatically by or using the processing system 50 or by or using the electric power system 10. The process 148 may be used in the methods according to any aspect or embodiment.

Process blocks 141 and 142 may be implemented as described with reference to Fig. 13.

The process 148 comprises parallel processing to determine the sensitivity matrices and/or the projection matrices for the congested branches in process blocks 143a-143c (which may be performed in parallel) and/or in process blocks 145a-145c (which may be performed in parallel).

By using the parallel processing, congestions can be resolved even faster.

The processing system 50 according to any embodiment may be configured specifically to have the parallel processing capability in which processing operations are performed in parallel for, e.g., different congested branches.

Fig. 15 is a schematic representation illustrating that the processing system 50 may comprise several integrated circuits (ICs) 56a', 56b', 56c' to execute, in parallel, processing operations related to different congested branches. For illustration, the processing system 50 may be operative such that different ones of the ICs 56a', 56b', 56c' determine the TDF matrices for different congested branches in parallel (i.e., concurrently). Alternatively or additionally, at least one IC of the processing system 50 may be operative to determine the TDF matrices for different congested branches using several parallel processing threads.

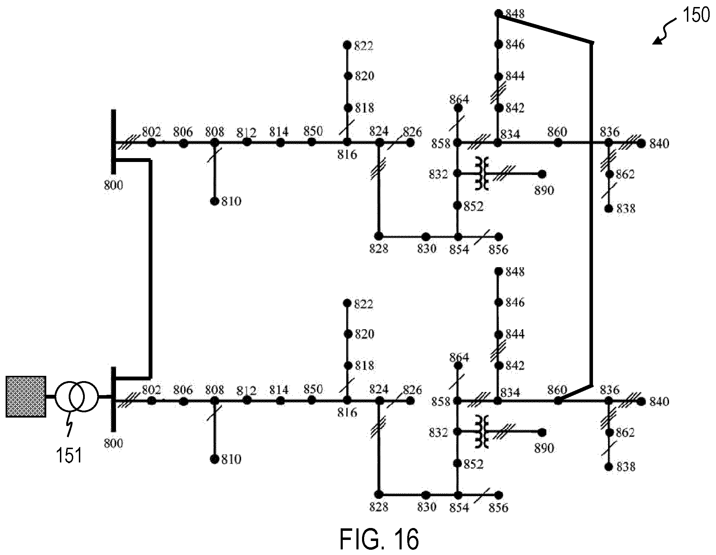

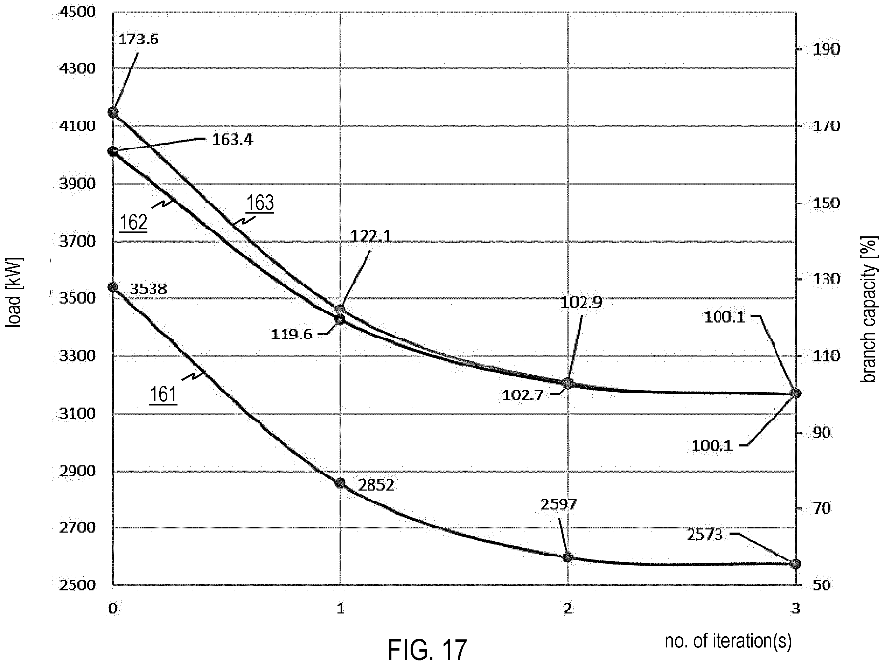

Fig. 16 and Fig. 17 illustrate how the methods and processing systems according to embodiments are operative to resolve a congestion using an iterative method in which a linearized correlation is established between a current magnitude and active and grid node conditions. Fig. 16 shows a grid topology of an electric power system for which the processing was performed. The grid topology is based on the IEEE 34 distribution test grid but in a twin feed configuration with customization (loopy grid, voltage controllers, reduced line ampacity). Fig. 17 shows the current magnitudes over the iterations (from 1 to 3), while the iteration 0 refers to the initial scenario (without any control actions) with a branch overload (created synthetically of about 60/70% of the rated value). Fig. 17 shows both a load 161 (in kW), a current 162 for the transformer 151 and a branch current 163 for one of the lines. The iterative method resolves the congestion in three iterations of the process, identifying settings that bring the load 161 and the currents 162, 163 back to their permitted operating ranges and thereby resolving the congestion.

As previously explained, while adjustments to the grid node conditions can be determined in each iteration, new settings will typically be applied responsive to a termination of the iterative process, e.g., responsive to verifying that the adjustments as determined in the most recent iteration resolve the congestion(s).

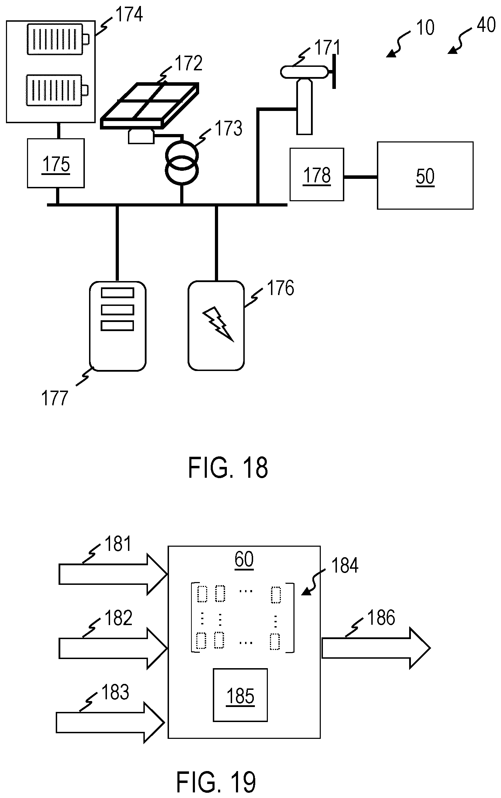

Fig. 18 is a schematic representation of the electric power system 40 in which the power grid 10 comprises assets such as a wind turbine 171, a PV system 172 that may be coupled to a bus via a converter/inverter 173 or other coupling system 173, a BESS 174 that may be coupled to a bus via a bi-directional converter/inverter 175, an EV charging station 176, and/or a HVAC system 177. The processing system 50 is operative to determine settings (e.g., setpoints) for at least some of the controllable assets to resolve a congestion. The processing system 50 is operative to communicatively interface with one or several control systems 178, such as an inverter/converter control system and/or a battery management system (BMS) and/or a power management system (PMS) and/or an energy system (EMS), to thereby apply settings determined to resolve the congestion.

Fig. 19 is a schematic representation that illustrates, on a high level, operation of the processing system 50. The processing system 50 comprises the congestion resolution 60 that is configured to determine the TDF matrix 184, which is dependent, inter alia, on a phase angle of a phasor of an electrical quantity in the complex plane. The congestion resolution 60 may comprise a projection operator generator 185 that generates the projection operator that determines the projections of the real and/or imaginary parts of any change in the electrical quantity onto the direction of the phasor.

The congestion resolution 60 may be operative to receive and process the following inputs: an input 181 that comprises an entire or equivalent system admittance matrix and primitive admittance matrices for each of the one or several overloaded branches; an input 182 that comprises the power flow solution, e.g., complex voltage over nodes and phases; and an input 183 that comprises the controllable asset data specifying controllable loads or generators with the power factor (PF) and connection setup (delta-connected or star-connected).

The congestion resolution 60 may be operative to apply linear processing techniques, e.g., for performing matrix by matrix and matrix by vector operations and/or a PLU factorization of the system admittance matrix. The congestion resolution 60 may be operative to perform a non-linear trigonometric data manipulation to perform the projection that is dependent on the phase angle of the phasor.

The congestion resolution 60 may be operative to provide, as output, the TDF matrix or a solution of a LP or MILP problem that is dependent on the TDF matrix, and that allows adjustments to be determined that resolve the congestion.

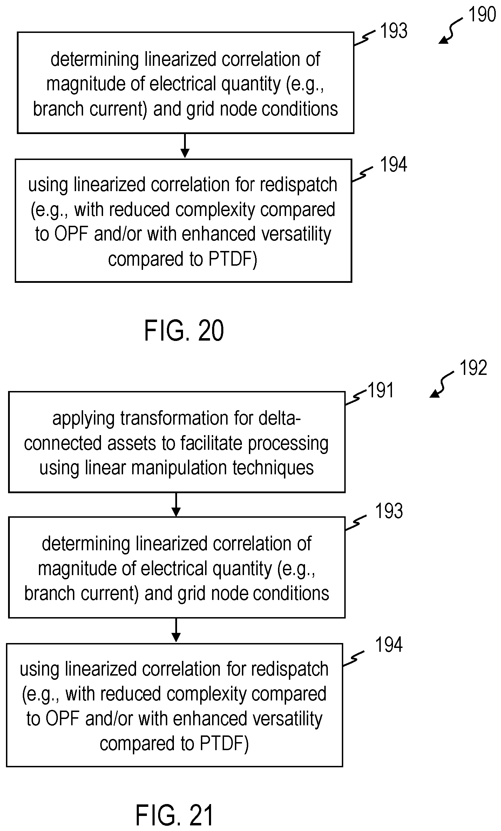

Fig. 20 is a flow chart of a use method 190. The use method 190 may be performed by or using the processing system 50, by or using the electric power system 10, or by or using the congestion resolution method according to any aspect or embodiment.

At process block 193, the processing system determines, respectively for each congested branch, a linearized correlation of a magnitude of an electrical quantity and grid node conditions. The linearized correlation may respectively be determined based on the phase angle of the phasor of the electrical quantity at the working point.

At process block 194, the linearized correlation is used for performing a redispatch that resolves the congestion. Performing the redispatch may comprise performing the redispatch at a higher resolution speed as compared to a full OPF solution-based approach and/or with a higher versatility as compared to PTDF-based approaches.

Thus, the use method 190 may be a method of using the processing system 50, the electric power system 10, or the congestion resolution method according to any aspect or embodiment for providing congestion resolution that is less prone to inaccuracies that may be caused by, e.g., unsymmetrical assets, unbalanced situations, and/or high voltage deviations between adjacent branches. The use method 190 may be a method of using the processing system 50, the electric power system 10, or the congestion resolution method according to any aspect or embodiment for providing congestion resolution that is more robust in the presence of, e.g., assets that comprise PV, wind turbines, HVAC systems, and/or EV charging stations.

Fig. 21 is a flow chart of a use method 191. The use method 191 may be performed by or using the processing system 50, by or using the electric power system 10, or by or using the congestion resolution method according to any aspect or embodiment.

At process block 191, the processing system applies a transformation that maps powers for delta-connected controllable assets to powers for star-connected assets with respect to ground reference.

Process blocks 193, 194 may be performed as explained with reference to Fig. 20, with the linearized correlation being dependent on the transformation (process block 191) for at least some of the congested branches.

Thus, the use method 191 may be a method of using the processing system 50, the electric power system 10, or the congestion resolution method according to any aspect or embodiment for providing congestion resolution that is less prone to inaccuracies that may be caused by, e.g., unsymmetrical assets, unbalanced situations, and/or high voltage deviations between adjacent branches. The use method 191 may be a method of using the processing system 50, the electric power system 10, or the congestion resolution method according to any aspect or embodiment for providing congestion resolution that is more robust in the presence of, e.g., assets that comprise PV, wind turbines, HVAC systems, and/or EV charging stations.

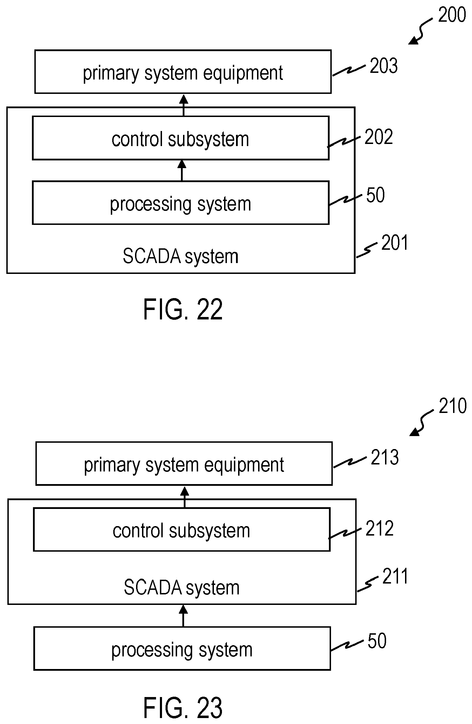

Fig. 22 is a block diagram of an electric power system 200 according to an embodiment. The electric power system 200 comprises the processing system 50 which may be operative according to any one of the embodiments disclosed herein.

The system electric power system 200 comprises a Supervisory Control and Data Acquisition (SCADA) system 201. The SCADA system 201 may be a distribution grid control system. The SCADA system 201 may comprise both the processing system 50 and a control subsystem 202 communicatively interfaced with the processing system 201. The processing system 50 and/or the control subsystem 202 may be operative to cause setpoints to be set to affect operation of primary system equipment 203 of the power grid. The processing system 50 may be operative to provide the output of the congestion resolution processing (which may comprise one or several setpoints for at least one controllable asset) to the control subsystem 202. The control subsystem 202 may comprise any one or any combination of ICs, integrated semiconductor circuits, processors, controllers, application specific integrated circuits (ASICs), field programmable gate arrays (FPGAs), circuit(s) including quantum bits (qubits) and/or quantum gates, without being limited thereto.

Fig. 23 is a block diagram of an electric power system 210 according to an embodiment. The electric power system 210 comprises the processing system 50 which may be operative according to any one of the embodiments disclosed herein.

The system electric power system 210 comprises a SCADA system 211. The SCADA system 211 may be a distribution grid control system. The SCADA system 211 may and the processing system 50 may be communicatively interfaced with each other. The SCADA system 211 comprise a control subsystem. The processing system 50 and/or the control subsystem 212 may be operative to cause setpoints to be set to affect operation of primary system equipment 213 of the power grid. The processing system 50 may be operative to provide the output of the congestion resolution processing (which may comprise one or several setpoints for at least one controllable asset) to the control subsystem 212 to effect control actions acting on the primary system equipment 213.

Various effects and advantages are attained by the method, the processing system, and the electric power system according to embodiments. The method, the processing system, and the electric power system according to embodiments are operative to perform a congestion resolution faster, when using the same processing hardware, as compared to a full OPF processing. This contributes to enhanced speed of the congestion resolution, mitigating the risk of potentially catastrophic failures. The method, the processing system, and the electric power system according to embodiments provide enhanced robustness, as compared to PTDF techniques, for various situations, such as unsymmetrical grid assets, unbalanced situations, and/or high voltage deviations. This enhanced stability mitigates the risk of potentially catastrophic failures.

While embodiments have been described in detail with reference to the drawings, various modifications may be implemented in other embodiments. For illustration rather than limitation:

The described processing or control systems or methods can also be applied for operating range violations other than a branch overcurrent.

The electrical quantity may be an electrical quantity having a complex-valued representation that may but does not need to be a current phasor.

The described processing or control systems or methods can use heuristic redispatch to determine a starting point for a further optimization-based congestion resolution method.

Embodiments may be used in association with a power grid having renewables penetration, such as power grid comprising renewable energy systems (such as DERs), without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method of resolving a congestion in a power grid (10), the power grid (10) comprising a plurality of grid nodes (11-22) and a plurality of branches (30), the method comprising:
responsive to detection of the congestion, performing, by at least one processing system (50), a process that comprises:
identifying, by the at least one processing system (50), one or several congested branches (31, 32) of the power grid (10) for which there exists an operating range violation;
determining, by the at least one processing system (50), a transfer distribution factor, TDF, matrix (T; 184) that approximates, for at least one of the one or several congested branches, a linearized correlation of changes in grid node conditions and a magnitude of an electrical quantity for the at least one of the one or several congested branches (31, 32); wherein the at least one processing system (50) determines the TDF matrix based at least on (i) a sensitivity matrix (S) that quantifies a sensitivity of a real part (84) and/or of an imaginary part (87) of the electrical quantity to the grid node conditions and (ii) a phase angle (83) of the electrical quantity;
determining, by the at least one processing system (50) and based on the TDF matrix (T; 184), adjustments of the grid node conditions that mitigate the operating range violation for the at least one of the one or several congested branches (31, 32); and
establishing, by the at least one processing system (50) and based on the adjustments, whether the process is to be repeated in an iterative manner;
performing or enabling, by the at least one processing system (50), at least one control action based on the adjustments.

2. The method of claim 1, wherein the electrical quantity comprises electrical current; and wherein the grid node conditions comprise one or both of:
active and reactive power deviations;
voltage magnitude and voltage phase of a voltage between grid nodes.

3. The method of any one of the preceding claims, wherein determining the TDF matrix (T; 184) comprises a matrix multiplication of a rotation matrix and the sensitivity matrix, the rotation matrix defining a two-dimensional rotation by the phase angle (83) in a coordinate system spanned by the real part and the imaginary parts of the electrical quantity.

4. The method of claim 3,
wherein the method comprises obtaining, by the at least one processing system (50), an admittance matrix of the power grid (10) and primitive admittance matrices for at least some of the plurality of branches;
wherein the process comprises determining an operating point of the power grid (10) based on the admittance matrix;
wherein determining the TDF matrix (T; 184) further comprises determining, for the at least one of the one or several congested branches (31, 32) and based on the primitive admittance matrices, a Jacobian matrix at the operating point, wherein the Jacobian matrix has matrix elements that are dependent on partial derivatives of active and reactive bus power injections with respect to a voltage phase angle and a voltage magnitudes of bus/phase voltages, and wherein determining the TDF matrix ((T; 184) further comprises determining the sensitivity matrix (S) based on the Jacobian matrix.

5. The method of claim 4, wherein determining the sensitivity matrix (S) comprises computing a pseudo-inverse of the Jacobian matrix discarding non-congested branches which are within a permitted operating range.

6. The method of claim 4 or claim 5, wherein determining the operating point further comprises processing observations obtained from the power grid (10) and/or settings applied to the power grid (10) by a power grid control system.

7. The method of any one of claims 4 to 6, wherein determining the TDF matrix (T; 184) further comprises determining, based on the operating point, transformation matrices for delta-connected assets (132) that map active and reactive power deviations for delta-connected assets (132) to active and reactive power deviations for star-connected assets (131) with respect to a ground reference.

8. The method of any one of claims 4 to 7, wherein determining the operating point further comprises executing, by the at least one processing system (50), a power flow solver based on the admittance matrix.

9. The method of any one of the preceding claims, wherein determining the adjustments comprises computing, by the at least one processing system (50), a solution of a linear programming model that is dependent on the TDF matrix (T; 184).

10. The method of any one of the preceding claims, wherein the grid nodes comprise several assets (171, 172, 174, 176, 177), the several assets comprising one, several, or all of: electric vehicle charging systems photovoltaic systems; heat pumps; heating, ventilation, and air conditioning (HVAC) systems; energy storage systems; wind turbines; and
wherein determining the adjustments comprises determining settings for at least some of the several assets (171, 172, 174, 176, 177) that resolve a congestion.

11. The method of any one of the preceding claims, wherein the power grid (10) comprises a distribution grid comprising one, several, or all of:
unsymmetrical loads and/or generators;
unsymmetrical transformers;
a passive element connecting two or more of the plurality of grid nodes;
single- and/or bi- and/or three-phase overhead lines;
single- and/or bi- and/or three-phase cables;
single- and/or bi- and/or three-phase loads;
single- and/or bi- and/or three-phase generators.

12. The method of any one of the preceding claims, wherein the power grid (10) comprises assets having a different number of phases and/or wherein the power grid (10) comprises both delta-connected assets (132) and star-connected assets (131).

13. Instruction code (54) which, upon execution by at least one processing circuit (56), causes the at least one processing circuit (56) to perform the method of any one of the preceding claims.

14. A processing system (50) for resolving a congestion in a power grid (10), the power grid (10) comprising a plurality of grid nodes (11-22) and a plurality of branches (30), the processing system (50) comprising:
at least one processing circuit (56) operative to, responsive to detection of the congestion, perform a process that comprises:
identifying, by the at least one processing system (50), one or several congested branches (31, 32) of the power grid (10) for which there exists an operating range violation;
determining, by the at least one processing system (50), a transfer distribution factor, TDF, matrix (T; 184) that approximates, for at least one of the one or several congested branches (31, 32), a linearized correlation of changes in grid node conditions and a magnitude of an electrical quantity for the at least one of the one or several congested branches; wherein the at least one processing system (50) determines the TDF matrix (T; 184) based at least on (i) a sensitivity matrix (S) that quantifies a sensitivity of a real part and/or of an imaginary part of the electrical quantity to the grid node conditions and (ii) a phase angle (83) of the electrical quantity;
determining, by the at least one processing system (50) and based on the TDF matrix (T; 184), adjustments of the grid node conditions that mitigate the operating range violation for the at least one of the one or several congested branches (31, 32); and
establishing, by the at least one processing system (50) and based on the adjustments, whether the process is to be repeated in an iterative manner;
wherein the at least one processing circuit (56) is operative to perform or enable at least one control action based on the adjustments.

15. An electric power system (40), comprising:
a power grid (10) comprising a plurality of grid nodes (11-22) and a plurality of branches (30); and
the processing system (50) of claim 14 operative for congestion resolution in the power grid (10).

## Amended claims

### Amended claims in accordance with Rule 137(2) EPC.

1. A method of resolving a congestion in a power grid (10), the power grid (10) comprising a plurality of grid nodes (11-22) and a plurality of branches (30), the method comprising:
responsive to detection of the congestion, performing, by at least one processing system (50), a process that comprises:
identifying, by the at least one processing system (50), one or several congested branches (31, 32) of the power grid (10) for which there exists an operating range violation;
determining, by the at least one processing system (50), a transfer distribution factor, TDF, matrix (T; 184) that approximates, for at least one of the one or several congested branches, a linearized correlation of changes in grid node conditions and a magnitude of an electrical quantity for the at least one of the one or several congested branches (31, 32); wherein the at least one processing system (50) determines the TDF matrix based at least on (i) a sensitivity matrix (S) that quantifies a sensitivity of a real part (84) and/or of an imaginary part (87) of the electrical quantity to the grid node conditions and (ii) a phase angle (83) of the electrical quantity;
determining, by the at least one processing system (50) and based on the TDF matrix (T; 184), adjustments of the grid node conditions that mitigate the operating range violation for the at least one of the one or several congested branches (31, 32); and
establishing, by the at least one processing system (50) and based on the adjustments, whether the process is to be repeated in an iterative manner;
performing or enabling, by the at least one processing system (50), at least one control action based on the adjustments.

2. The method of claim 1, wherein the electrical quantity comprises electrical current; and wherein the grid node conditions comprise one or both of:
active and reactive power deviations;
voltage magnitude and voltage phase of a voltage between grid nodes.

3. The method of any one of the preceding claims, wherein determining the TDF matrix (T; 184) comprises a matrix multiplication of a rotation matrix and the sensitivity matrix, the rotation matrix defining a two-dimensional rotation by the phase angle (83) in a coordinate system spanned by the real part and the imaginary parts of the electrical quantity.

4. The method of claim 3,
wherein the method comprises obtaining, by the at least one processing system (50), an admittance matrix of the power grid (10) and primitive admittance matrices for at least some of the plurality of branches;
wherein the process comprises determining an operating point of the power grid (10) based on the admittance matrix;
wherein determining the TDF matrix (T; 184) further comprises determining, for the at least one of the one or several congested branches (31, 32) and based on the primitive admittance matrices, a Jacobian matrix at the operating point, wherein the Jacobian matrix has matrix elements that are dependent on partial derivatives of active and reactive bus power injections with respect to a voltage phase angle and a voltage magnitudes of bus/phase voltages, and wherein determining the TDF matrix (T; 184) further comprises determining the sensitivity matrix (S) based on the Jacobian matrix.

5. The method of claim 4, wherein determining the sensitivity matrix (S) comprises computing a pseudo-inverse of the Jacobian matrix discarding non-congested branches which are within a permitted operating range.

6. The method of claim 4 or claim 5, wherein determining the operating point further comprises processing observations obtained from the power grid (10) and/or settings applied to the power grid (10) by a power grid control system.

7. The method of any one of claims 4 to 6, wherein determining the TDF matrix (T; 184) further comprises determining, based on the operating point, transformation matrices for delta-connected assets (132) that map active and reactive power deviations for delta-connected assets (132) to active and reactive power deviations for star-connected assets (131) with respect to a ground reference.

8. The method of any one of claims 4 to 7, wherein determining the operating point further comprises executing, by the at least one processing system (50), a power flow solver based on the admittance matrix.

9. The method of any one of the preceding claims, wherein determining the adjustments comprises computing, by the at least one processing system (50), a solution of a linear programming model that is dependent on the TDF matrix (T; 184).

10. The method of any one of the preceding claims, wherein the grid nodes comprise several assets (171, 172, 174, 176, 177), the several assets comprising one, several, or all of: electric vehicle charging systems photovoltaic systems; heat pumps; heating, ventilation, and air conditioning (HVAC) systems; energy storage systems; wind turbines; and
wherein determining the adjustments comprises determining settings for at least some of the several assets (171, 172, 174, 176, 177) that resolve a congestion.

11. The method of any one of the preceding claims, wherein the power grid (10) comprises a distribution grid comprising one, several, or all of:
unsymmetrical loads and/or generators;
unsymmetrical transformers;
a passive element connecting two or more of the plurality of grid nodes;
single- and/or bi- and/or three-phase overhead lines;
single- and/or bi- and/or three-phase cables;
single- and/or bi- and/or three-phase loads;
single- and/or bi- and/or three-phase generators.

12. The method of any one of the preceding claims, wherein the power grid (10) comprises assets having a different number of phases and/or wherein the power grid (10) comprises both delta-connected assets (132) and star-connected assets (131).

13. Instruction code (54) or non-transitory storage medium storing instruction code, wherein the instruction code (54), upon execution by at least one processing circuit (56), causes the at least one processing circuit (56) to perform the method of any one of the preceding claims.

14. A processing system (50) for resolving a congestion in a power grid (10), the power grid (10) comprising a plurality of grid nodes (11-22) and a plurality of branches (30), the processing system (50) comprising:
at least one processing circuit (56) operative to, responsive to detection of the congestion, perform a process that comprises:
identifying, by the at least one processing system (50), one or several congested branches (31, 32) of the power grid (10) for which there exists an operating range violation;
determining, by the at least one processing system (50), a transfer distribution factor, TDF, matrix (T; 184) that approximates, for at least one of the one or several congested branches (31, 32), a linearized correlation of changes in grid node conditions and a magnitude of an electrical quantity for the at least one of the one or several congested branches; wherein the at least one processing system (50) determines the TDF matrix (T; 184) based at least on (i) a sensitivity matrix (S) that quantifies a sensitivity of a real part and/or of an imaginary part of the electrical quantity to the grid node conditions and (ii) a phase angle (83) of the electrical quantity;
determining, by the at least one processing system (50) and based on the TDF matrix (T; 184), adjustments of the grid node conditions that mitigate the operating range violation for the at least one of the one or several congested branches (31, 32); and
establishing, by the at least one processing system (50) and based on the adjustments, whether the process is to be repeated in an iterative manner;
wherein the at least one processing circuit (56) is operative to perform or enable at least one control action based on the adjustments.

15. An electric power system (40), comprising:
a power grid (10) comprising a plurality of grid nodes (11-22) and a plurality of branches (30); and
the processing system (50) of claim 14 operative for congestion resolution in the power grid (10).
